(19) Europäisches Patentamt / European Patent Office / Office européen des brevets

(11) **EP 2 534 775 B1**

(12) **EUROPÄISCHE PATENTSCHRIFT**

(45) Veröffentlichungstag und Bekanntmachung des Hinweises auf die Patenterteilung:
**15.06.2016 Patentblatt 2016/24**

(21) Anmeldenummer: **10798822.2**

(22) Anmeldetag: **29.12.2010**

(51) Int Cl.:
$H04J\ 3/06^{(2006.01)}$

(86) Internationale Anmeldenummer:
**PCT/EP2010/070849**

(87) Internationale Veröffentlichungsnummer:
**WO 2011/098192 (18.08.2011 Gazette 2011/33)**

(54) **VERFAHREN ZUR ZEITSYNCHRONISATION IN EINEM KOMMUNIKATIONSNETZ**

METHOD FOR TIME SYNCHRONIZATION IN A COMMMUNICATION NETWORK

PROCÉDÉ DE SYNCHRONISATION DE TEMPS DANS UN RESEAU DE COMMUNICATION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **02.06.2010 DE 102010022525**
**11.02.2010 EP 10001424**

(43) Veröffentlichungstag der Anmeldung:
**19.12.2012 Patentblatt 2012/51**

(73) Patentinhaber: **Siemens Aktiengesellschaft 80333 München (DE)**

(72) Erfinder:
- **NA, Chongning**
  **Chaoyang District**
  **Beijing 100107 (CN)**
- **OBRADOVIC, Dragan**
  **85521 Ottobrunn (DE)**
- **SCHEITERER, Ruxandra**
  **82538 Geretsried (DE)**
- **WOLFRUM, Philipp**
  **81539 München (DE)**

(56) Entgegenhaltungen:
**EP-A1- 2 020 766**

- **NA C ET AL: "A Kalman Filter Approach To Clock Synchronization Of Cascaded Network Elements", 1ST IFAC WORKSHOP ON ESTIMATION AND CONTROL OF NETWORKED SYSTEMS 2009 : VENICE, ITALY, 24 - 26 SEPTEMBER 2009, CURRAN, US, 1. Januar 2009 (2009-01-01), Seiten 54-59, XP009145262, ISBN: 978-1-61738-022-8 in der Anmeldung erwähnt**
- **NILSSON J ET AL: "LQG control over a Markov communication network", DECISION AND CONTROL, 1997., PROCEEDINGS OF THE 36TH IEEE CONFERENCE O N SAN DIEGO, CA, USA 10-12 DEC. 1997, NEW YORK, NY, USA,IEEE, US, Bd. 5, 10. Dezember 1997 (1997-12-10), Seiten 4586-4591, XP010265903, DOI: DOI:10.1109/CDC.1997.649701 ISBN: 978-0-7803-4187-6**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zur Zeitsynchronisation in einem Kommunikationsnetz sowie einen Knoten in einem Kommunikationsnetz und ein entsprechendes Kommunikationsnetz.

In vielen technischen Gebieten werden Kommunikationsnetze dazu verwendet, verteilte Prozesse auf einer Vielzahl von Einheiten automatisch auszuführen. Insbesondere in industriellen Automatisierungsnetzen ist es dabei sehr wichtig, dass die automatischen Prozesse exakt aufeinander abgestimmt sind. Hierzu umfassen die einzelnen Knoten in dem Kommunikationsnetz entsprechende Uhren, welche auf eine Referenzuhr in einem Referenzknoten synchronisiert werden. Der Referenzknoten wird häufig auch als Master-Knoten bezeichnet, wohingegen die anderen Knoten mit den internen Uhren in der Regel Slave-Knoten genannt werden.

Aus dem Stand der Technik bekannte Protokolle zur Synchronisation der Uhren in einem Kommunikationsnetz sind in den industriellen Standards IEEE 1588, IEC 61158 und IEEE 802.1AS spezifiziert. Gemäß diesen Protokollen werden Synchronisationsnachrichten in der Form von Paketen mit Zeitstempeln ausgetauscht. Dabei wird eine Synchronisationsnachricht ausgehend von dem Master-Knoten aufeinander folgend zwischen den Slave-Knoten weitergeleitet. Die von dem Master-Knoten ausgehende Synchronisationsnachricht enthält einen Zeitstempel des ersten Taktzählzustands gemäß der Referenzuhr zum Zeitpunkt des Aussendens der Nachricht. Die Slave-Knoten verarbeiten diese Information und senden erneut Synchronisationsnachrichten aus. Dabei addiert jeder Slave-Knoten die geschätzten Verzögerungen zwischen dem Aussende-Zeitpunkt der Synchronisationsnachricht im vorhergehenden Knoten und seinem eigenen Aussende-Zeitpunkt zu dem ersten Taktzählzustand in der empfangenen Synchronisationsnachricht. Der sich hierdurch ergebende Taktzählzustand wird in die auszusendende Synchronisationsnachricht eingefügt. Basierend auf den Informationen in den empfangenen Synchronisationsnachrichten kann jeder Slave-Knoten seine zweiten Taktzählzustände gemäß seiner internen Uhr auf die ersten Taktzählzustände gemäß der Referenzuhr synchronisieren.

Ein Problem bei der oben beschriebenen Synchronisation der Uhren besteht darin, dass aufgrund von Messfehlern bei der Zeitbestimmung, variierenden Frequenzen der einzelnen Uhren, zufälligen Umgebungseffekten und unbekannten Variationen betreffend die Zeitverzögerung zwischen Empfang und Aussenden von Synchronisationsnachrichten die internen Uhren der Slave-Knoten nicht hinreichend genau auf die Referenzuhr des Master-Knotens abgestimmt werden können.

Um die obigen Unsicherheiten bei der Synchronisation der Uhren zu berücksichtigen, ist es aus der Druckschrift [2] sowie einer darauf beruhenden europäischen Patentanmeldung (Referenz [1]) bekannt, basierend auf einem probabilistischen Modell für Zustandsvariablen der Knoten die ersten Taktzählzustände in jedem Slave-Knoten abzuschätzen und mittels der abgeschätzten ersten Taktzählzustände die internen Uhren auf die Referenzuhr zu synchronisieren. Dabei ist der Verlauf der zweiten Taktzählzustände der jeweiligen zweiten Knoten in Abhängigkeit von ersten Taktzählzuständen nicht stetig und beim Empfang von einer neuen Synchronisationsnachricht, welche zur Aktualisierung der Synchronisation führt, können Sprünge auftreten.

Die Druckschrift [3] offenbart ein Verfahren zur Zeitsynchronisation in einem Kommunikationsnetz unter Verwendung eines LQG-Reglers.

In der Druckschrift [4] wird ein Kommunikationssystem beschrieben, bei dem eine Zeitsynchronisation unter Verwendung eines Kalman-Filters durchgeführt wird.

Aufgabe der Erfindung ist es, in einem Kommunikationsnetz eine über die Zeit gleichmäßige Zeitsynchronisation mit hoher Genauigkeit zu schaffen.

Diese Aufgabe wird durch die unabhängigen Patentansprüche gelöst. Weiterbildungen der Erfindung sind in den abhängigen Ansprüchen definiert.

Das erfindungsgemäße Verfahren dient zur Zeitsynchronisation in einem Kommunikationsnetz mit einer Mehrzahl von Knoten, wobei die Knoten einen ersten Knoten und einen oder mehrere zweite Knoten umfassen. Der erste Knoten generiert dabei erste Taktzählzustände gemäß einer Referenztaktfrequenz, welche auf einer Referenzuhr in diesem Knoten basiert oder welche der erste Knoten von einer Quelle absoluter Zeit, z.B. GPS oder DCF77, empfängt. Der oder die zweiten Knoten generieren jeweils zweite Taktzählzustände gemäß einer internen Taktfrequenz, welche durch eine interne Uhr in dem jeweiligen zweiten Knoten gegeben ist. Die Zeitsynchronisation wird in dem erfindungsgemäßen Verfahren in aufeinander folgenden Synchronisationszyklen durchgeführt, in denen jeweils Synchronisationsnachrichten ausgehend von dem ersten Knoten aufeinander folgend von einem Knoten zu einem weiteren Knoten übertragen werden und eine von einem Knoten ausgesendete Synchronisationsnachricht eine Information enthält, welche zur Zeitsynchronisation im die Synchronisationsnachricht empfangenden Knoten verwendet wird.

In dem erfindungsgemäßen Verfahren erfolgt eine Zeitsynchronisation in einem jeweiligen zweiten Knoten zumindest eines Teils der zweiten Knoten und insbesondere in allen zweiten Knoten basierend auf den nachfolgend erläuterten Schritten i) und ii). In Schritt i) wird ein erster Taktzählzustand, der einem in dem jeweiligen zweiten Knoten gemessenen zweiten Taktzählzustand entspricht, basierend auf einem Schätzverfahren mit Hilfe der Information in einer empfangenen Synchronisationsnachricht abgeschätzt. Es können hierzu aus dem Stand der Technik bekannte Schätzverfahren (z.B. ein dezentraler oder ein zentraler Kalman-Filter) verwendet werden. Anschließend wird in einem Schritt ii) aus dem abgeschätzten ersten Taktzählzustand mit Hilfe eines Linear-Quadratischen Regulators, bzw. eines LQG-Reglers (LQG = Linear Quadratic Gaussian), ein geregelter erster Taktzählzustand basierend auf einer Regelstrecke ermittelt, welche als Stellgröße einen Kompensationsfaktor enthält, welcher ein aktuelles Taktverhältnis der Referenztaktfrequenz zur internen Taktfrequenz des jeweiligen zweiten Knotens schätzt. Dabei stellt der geregelte erste Taktzählzustand die synchronisierte Zeit dar. Der LQG-Regler ist insbesondere dann angebracht, wenn im Schritt i) kein Kalman-Filter eingesetzt wird.

Das erfindungsgemäße Verfahren beruht auf der Erkenntnis, dass mittels einer Regelung basierend auf einem Linear-Quadratischen Regulator (englisch: Linear Quadratic Regulator), welche an sich aus dem Stand der Technik bekannt ist, eine präzise und über die Zeit hinweg gleichmäßige synchronisierte Zeit gewährleistet wird und hierdurch eine gute Synchronisation einer internen Taktfrequenz des jeweiligen zweiten Knotens auf die Referenztaktfrequenz des ersten Knotens erreicht wird. Dabei werden durch die Verwendung eines Kompensationsfaktors auftretende Frequenzschwankungen der internen Taktfrequenz des jeweiligen zweiten Knotens in geeigneter Weise berücksichtigt.

In einer besonders bevorzugten Ausführungsform des erfindungsgemäßen Verfahrens wird die Stellgröße nach jedem Empfang einer Synchronisationsnachricht in dem jeweiligen zweiten Knoten aktualisiert und der Regelstrecke zugeführt. Auf diese Weise wird eine kontinuierliche Aktualisierung der Synchronisation sichergestellt. Vorzugsweise wird dabei die Stellgröße über ein sog. ZOH-Glied (ZOH = Zero Order Hold) der Regelstrecke zugeführt, um auf diese Weise die diskreten Aktualisierungen auf eine kontinuierliche Dynamik der Regelstrecke abzubilden.

In einer bevorzugten Variante des erfindungsgemäßen Verfahrens lautet die Regelstrecke für den Linear-Quadratischen Regulator zum Zeitpunkt des Empfangs einer Synchronisationsnachricht im k-ten Synchronisationszyklus im n-ten zweiten Knoten und unmittelbar vor einer Aktualisierung der Stellgröße wie folgt:

$$\hat{x}_n^{\mathrm{C}}(k) = \hat{x}_n^{\mathrm{C}}(k-1) + o_n(k-1) \cdot a_n(k)$$

wobei $\hat{x}_n^{\mathrm{C}}(k)$ der geregelte erste Taktzählzustand zum Zeitpunkt des Empfangs der Synchronisationsnachricht im k-ten Synchronisationszyklus ist;

wobei $o_n(k-1)$ der im (k-1)-ten Synchronisationszyklus verwendete Kompensationsfaktor ist;

wobei $a_n(k)$ die Zeitdifferenz zwischen zwei aufeinander folgend im jeweiligen zweiten Knoten empfangenen Synchronisationsnachrichten ist, angegeben in zweiten Taktzählzuständen gemäß der internen Taktfrequenz des n-ten zweiten Knotens.

Die Dynamik der Regelstrecke für den Linear-Quadratischen Regulator nach einer Aktualisierung der Stellgröße zum Zeitpunkt des Empfangs der Synchronisationsnachricht im k-ten Synchronisationszyklus in dem n-ten zweiten Knoten bis zur nächsten Aktualisierung der Stellgröße lautet dabei vorzugsweise wie folgt:

$$x_n^C = \hat{x}_n^{\mathrm{C}}(k) + o_n(k) \cdot \left( S_n - TS(S_n^{\mathrm{in}}(k)) \right)$$

c

wobei $x_n^C$ der geregelte erste Taktzählzustand zum Zeitpunkt eines gemessenen zweiten Taktzählzustands $S_n$ des jeweiligen zweiten Knotens zwischen den beiden Aktualisierungen ist;

wobei $TS(S_n^{\mathrm{in}}(k))$ der gemessene zweite Taktzählzustand des jeweiligen zweiten Knotens zum Zeitpunkt des Empfangs der k-ten Synchronisationsnachricht ist.

Der obige Kompensationsfaktor $o_n(k)$ für den k-ten Synchronisationszyklus ist vorzugsweise gegeben durch:

$$o_n(k) = \hat{R}_n(k) + \frac{(\hat{x}_n^{\mathrm{in}} - \hat{x}_n^{\mathrm{C}}(k))}{\beta + a_n(k)}$$

wobei $\hat{R}_n(k)$ ein geschätzter Wert für das Taktverhältnis der Referenztaktfrequenz zur internen Taktfrequenz des n-ten zweiten Knotens ist;

wobei $\hat{x}_n^{\mathrm{in}}$ der in Schritt i) abgeschätzte erste Taktzählzustand ist;

wobei β ein positiver Faktor ist, der vorzugsweise zwischen 5 und 20 liegt.

Eine Herleitung dieses Kompensationsfaktors findet sich in der detaillierten Beschreibung. Entsprechende Verfahren zum Abschätzen des Taktverhältnisses sind dabei hinlänglich aus dem Stand der Technik bekannt und eine Variante eines solchen Verfahrens wird ebenfalls in der detaillierten Beschreibung dargelegt.

In einer besonders bevorzugten Ausführungsform wird der erste Taktzählzustand in Schritt i) mit einem Schätzverfahren in der Form eines stochastischen Zustandsschätzers und insbesondere eines Kalman-Filters abgeschätzt. Das Kalman-Filter ist generell aus dem Stand der Technik bekannt und schätzt einen unbekannten Zustand eines Systems basierend auf einem entsprechenden Zustandsraummodell, welches zum einen die Veränderung des zu schätzenden Zustands (sog. Zustands-Übergangs-Modell) und zum anderen den Zusammenhang zwischen dem Zustand und entsprechenden bekannten Observablen (sog. Beobachtungsmodell) beschreibt. Die Erfinder konnten nachweisen, dass die Kombination aus einer Zustandsschätzung mittels des Kalman-Filters und einem Linear-Quadratischen Regulator einen optimalen LQG-Regler (LQG = Linear Quadratic Gaussian) darstellt, wobei die LQG-Regelung hinlänglich aus dem Stand der Technik bekannt ist. Es wird somit durch die Kombination von Kalman-Filter und Linear-Quadratischem Regulator eine besonders gute Zeitsynchronisation gewährleistet.

In einer besonders bevorzugten Ausführungsform wird der erste Taktzählzustand mit einem Schätzverfahren in der Form eines Kalman-Filters abgeschätzt, das als Zustand den ersten Taktzählzustand zum Empfangszeitpunkt einer Synchronisationsnachricht in dem jeweiligen zweiten Knoten und eine zugehörige stochastische Varianz abschätzt und als eine Observable die Information in der empfangenen Synchronisationsnachricht verwendet. Die Information in einer Synchronisationsnachricht umfasst dabei vorzugsweise einen abgeschätzten ersten Taktzählzustand zum Aussende-Zeitpunkt der Synchronisationsnachricht in dem jeweiligen zweiten Knoten und eine zugehörige stochastische Varianz.

In einer besonders bevorzugten Ausführungsform des erfindungsgemäßen Verfahrens wird folgendes Zustandsraummodell für das Kalman-Filter im n-ten zweiten Knoten für den k-ten Synchronisationszyklus verwendet:

$$x_n^{\text{in}}(k) = x_n^{\text{in}}(k-1) + a_n(k) \cdot \hat{R}_n(k) + a_n(k) \cdot \eta_n^a(k)$$

$$x_{n-1}^{\text{out}}(k) = x_n^{\text{in}}(k) - c_n(k) \cdot \hat{R}_n(k) - c_n(k) \cdot \eta_n^c(k) + v_n(k)$$

wobei $x_n^{\text{in}}(k)$ der erste Taktzählzustand zum Empfangszeitpunkt der Synchronisationsnachricht in dem n-ten zweiten Knoten im k-ten Synchronisationszyklus ist;

wobei $x_{n-1}^{\text{out}}(k)$ der erste Taktzählzustand beim Aussenden der Synchronisationsnachricht in dem (n-1)-ten zweiten Knoten oder im ersten Knoten im k-ten Synchronisationszyklus ist;

wobei $a_n(k)$ die Zeitdifferenz zwischen zwei aufeinander folgend im jeweiligen zweiten Knoten empfangenen Synchronisationsnachrichten ist, angegeben in zweiten Taktzählzuständen gemäß der internen Taktfrequenz des n-ten zweiten Knotens;

wobei $\hat{R}_n(k)$ ein geschätzter Wert für das Taktverhältnis der Referenztaktfrequenz zur internen Taktfrequenz des n-ten zweiten Knotens ist;

wobei $c_n(k)$ eine geschätzte Verzögerungszeit zwischen dem Aussende-Zeitpunkt der vom (n-1)-ten zweiten Knoten ausgesendeten Synchronisationsnachricht und dem Empfangszeitpunkt dieser Synchronisationsnachricht im n-ten zweiten Knoten ist, angegeben in zweiten Taktzählzuständen gemäß der internen Taktfrequenz des n-ten zweiten Knotens;

wobei $\eta_n^a(k)$ $\eta_n^c(k)$ und $v_n(k)$ Gaußsche Rauschterme sind.

Eine Herleitung des oben beschriebenen Zustandsraummodells, welches auf dem Zustandsraummodell der Referenzen [1] bzw. [2] beruht, findet sich in der detaillierten Beschreibung. Entsprechende Verfahren zum Abschätzen des Taktverhältnisses bzw. der Verzögerungszeit zwischen Empfang und Aussenden einer Synchronisationsnachricht sind dabei hinlänglich aus dem Stand der Technik bekannt.

In einer weiteren, besonders bevorzugten Ausführungsform des erfindungsgemäßen Verfahrens werden aus dem durch das Kalman-Filter abgeschätzten ersten Taktzählzustand zum Empfangszeitpunkt einer Synchronisationsnachricht in dem jeweiligen zweiten Knoten und der zugehörigen stochastischen Varianz der abgeschätzte erste Taktzählzustand zum Aussende-Zeitpunkt der nachfolgenden Synchronisationsnachricht im jeweiligen zweiten Knoten und die zugehörige stochastische Varianz mit Hilfe einer Knoten-Verarbeitungszeit berechnet und in die nachfolgende Synchronisationsnachricht eingefügt, wobei die Knoten-Verarbeitungszeit eine in dem jeweiligen zweiten Knoten geschätzte Verzögerungszeit zwischen dem Empfang der in dem jeweiligen zweiten Knoten empfangenen Synchronisationsnachricht und dem Aussenden der nachfolgenden Synchronisationsnachricht repräsentiert. Diese geschätzte Verzögerungszeit kann ein zweiter Knoten auf einfache Weise über seine lokalen zweiten Taktzählzustände ermitteln.

Die Zeitsynchronisation, welche gemäß dem erfindungsgemäßen Verfahren eingesetzt wird, basiert vorzugsweise auf einem der oben erwähnten Standards IEEE 1588 bzw. IEC 61588 bzw. IEEE 802.1AS. In einer weiteren Ausführungsform kommunizieren die Knoten in dem Kommunikationsnetz basierend auf dem bekannten PROFINET-Standard. Ferner wird das erfindungsgemäße Verfahren vorzugsweise in einem Kommunikationsnetz in einer industriellen Automatisierungsanlage eingesetzt.

Die Erfindung betrifft darüber hinaus einen Knoten zur Verwendung als zweiter Knoten in einem Verfahren zur Zeitsynchronisation in einem Kommunikationsnetz, wobei der Knoten zur Durchführung der Zeitsynchronisation gemäß den Schritten i) und ii) des erfindungsgemäßen Verfahrens eingerichtet ist.

Die Erfindung betrifft darüber hinaus ein Kommunikationsnetz mit einer Vielzahl von Knoten, wobei das Kommunikationsnetz einen ersten Knoten und zumindest einen erfindungsgemäßen zweiten Knoten umfasst. Das Kommunikationsnetz ist dabei vorzugsweise zur Ausführung einer oder mehrerer der oben beschriebenen bevorzugten Varianten des erfindungsgemäßen Verfahrens ausgelegt.

Ausführungsbeispiele der Erfindung werden nachfolgend anhand der beigefügten Figuren detailliert beschrieben.

Es zeigen:

Fig. 1    eine schematische Darstellung von mehreren Knoten in einem Kommunikationsnetz, welche Synchronisationsnachrichten gemäß einer Ausführungsform der Erfindung austauschen;

Fig. 2    ein Diagramm, welches die Übertragung von Synchronisationsnachrichten gemäß einer Ausführungsform der Erfindung wiedergibt; und

Fig. 3    eine schematische Darstellung des Aufbaus eines zweiten Knotens in einem Kommunikationsnetz, welcher zur Durchführung einer Variante des erfindungsgemäßen Verfahrens eingerichtet ist.

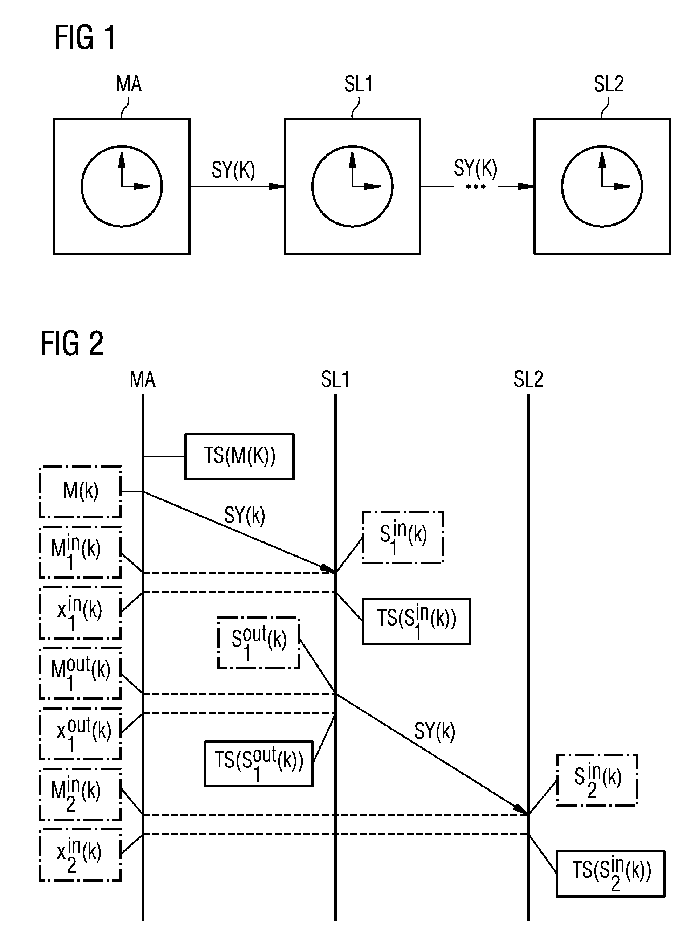

Fig. 1 zeigt eine Kette von Knoten in einem Kommunikationsnetz, in dem eine Ausführungsform des erfindungsgemäßen Verfahrens durchgeführt wird. Das Kommunikationsnetz umfasst einen ersten Knoten in der Form eines sog. Master-Knotens MA sowie mehrere zweite Knoten in der Form sog. Slave-Knoten, wobei in Fig. 1 zwei Slave-Knoten SL1 und SL2 gezeigt sind. Der Master-Knoten MA enthält eine Referenzuhr, welche eine Referenztaktfrequenz generiert. Demgegenüber enthalten die einzelnen Slave-Knoten SL1, SL2 usw. separate interne Uhren, welche entsprechende interne Taktfrequenzen generieren. In dem Kommunikationsnetz gemäß Fig. 1 wird ein geeignetes Zeitsynchronisationsprotokoll, beispielsweise das PTP-Protokoll gemäß dem Standard IEEE 1588 (PTP = Precision Time Protocol), verwendet, um die interne Uhr jedes Slave-Knotens mit der Referenzuhr des Master-Knotens MA zu synchronisieren. Hierzu werden Synchronisationsnachrichten SY(k) von einem Knoten zum nächsten weitergeleitet. Das heißt, eine Synchronisationsnachricht wird von dem Master-Knoten MA zu dem Slave-Knoten SL1 und von dem Slave-Knoten SL1 zu dem Slave-Knoten SL2 usw. geschickt, bis der letzte Slave-Knoten SLN in der Kette der Slave-Knoten erreicht ist.

Die Übertragung von Synchronisationsnachrichten wird in aufeinander folgenden Synchronisationszyklen wiederholt, wobei k die aktuelle Nummer des Synchronisationszyklus bezeichnet. Um eine Synchronisation der Uhren durchzuführen, enthalten die Synchronisationsnachrichten SY(k) jeweils einen Zeitstempel, welcher den Taktzählzustand der Referenzuhr zum Zeitpunkt des Aussendens der Synchronisationsnachricht repräsentiert. Taktzählzustände der Referenzuhr werden im Folgenden auch als erste Taktzählzustände bezeichnet. Die entsprechenden Taktzählzustände basierend auf der internen Uhr der jeweiligen Slave-Knoten werden im Folgenden auch als zweite Taktzählzustände bezeichnet. Beim Weiterleiten einer Synchronisationsnachricht von einem Slave-Knoten zum nächsten wird der erste Taktzählzustand in der Synchronisationsnachricht aktualisiert, indem zu der Zeit der Referenzuhr der zuvor empfangenen Synchronisationsnachricht das Zeitintervall zwischen dem Aussenden der Synchronisationsnachricht beim vorherigen Knoten bis zum Aussenden derselben im aktuellen Knoten hinzuaddiert wird. Dieses Zeitintervall setzt sich aus dem sog. Line-Delay und Bridge-Delay zusammen. Das Line-Delay ist dabei das Zeitintervall zwischen dem Aussenden der Synchronisationsnachricht im vorhergehenden Knoten und dem Empfang dieser Synchronisationsnachricht im aktuellen Knoten. Das Bridge-Delay ist demgegenüber das Zeitintervall zwischen dem Empfang einer Synchronisationsnachricht im aktuellen Knoten und dem Aussenden derselben an den nächsten Knoten. Line-Delay und Bridge-Delay unterliegen Messfehlern.

In Fig. 2 repräsentieren die drei vertikalen Linien die gemessene Zeit in dem Master-Knoten MA bzw. dem Slave-Knoten SL1 bzw. dem Slave-Knoten SL2. Die Zeitachse gemäß diesen vertikalen Linien erstreckt sich von oben nach unten, d.h. zukünftige Ereignisse werden an weiter unten liegenden Positionen entlang der vertikalen Linien wiedergegeben. Die Referenzuhr des Master-Knotens MA arbeitet mit der Referenztaktfrequenz und die Uhren der Slave-Knoten SL1 und SL2 arbeiten mit entsprechenden internen Taktfrequenzen, welche untereinander unterschiedlich sein können und sich auch von der Referenztaktfrequenz unterscheiden können. Die Zeit in jedem Knoten wird basierend auf der entsprechenden Uhr des jeweiligen Knotens gemessen, d.h. mit der entsprechenden Taktfrequenz der Uhr des betrachteten Knotens.

In dem Diagramm der Fig. 2 bezieht sich die Funktion TS auf den Zeitstempel eines Taktzählzustands und repräsentiert den Messwert eines Taktzählzustands. Aufgrund von Fluktuationen (sog. Jitter) und Frequenzdrifts kann sich der Zeitstempel von dem wahren Taktzählzustand unterscheiden. Fig. 2 zeigt die Übertragung der Synchronisationsnachricht SY(k), welche von dem Master-Knoten MA zum wahren bzw. tatsächlichen ersten Taktzählzustandwert M(k) ausgesendet wird. Zu diesem Taktzählzustandwert gehört der gemessene erste Taktzählzustandwert TS(M(k)), der sich hiervon unterscheidet. Die Nachricht SY(k) wird von dem Slave-Knoten SL1 zum zweiten Taktzählzustand $S_1^{in}(k)$ empfangen, wobei dieser zweite Taktzählzustand dem gemessenen zweiten Taktzählzustand $TS\left(S_1^{in}(k)\right)$ entspricht. Die Verzögerungszeit zwischen dem Senden der Synchronisationsnachricht von dem Master-Knoten MA und dem Empfang dieser Nachricht in dem Slave-Knoten SL1 wird als sog. Line-Delay bezeichnet und mit einem geeigneten Schätzverfahren abgeschätzt. Im Rahmen dieses Schätzverfahrens werden zusätzlich geeignete Nachrichten zur Ermittlung der Line-Delay übertragen. In dem oben erwähnten Standard IEEE 1588 wird ein solches Schätzverfahren beschrieben, welches auch in dem hier beschriebenen erfindungsgemäßen Verfahren eingesetzt werden kann. Nach dem Erhalt einer Synchronisationsnachricht wird nach Ablauf einer sog. Bridge-Delay, welche die interne Verarbeitungszeit in einem Knoten repräsentiert, eine neue Synchronisationsnachricht von dem Slave-Knoten SL1 zu dem Slave-Knoten SL2 gesendet. Diese neue Nachricht wird zum Zeitpunkt des wahren zweiten Taktzustands $S_1^{out}(k)$ des Slave-Knotens SL1 ausgesendet. Dieser wahre zweite Taktzählzustand entspricht dabei dem in dem Slave-Knoten SL1 gemessenen zweiten Taktzählzustand $TS\left(S_1^{out}(k)\right)$.

Die von dem Slave-Knoten SL1 ausgesendete Synchronisationsnachricht wird in dem Slave-Knoten SL2 zum wahren zweiten Taktzählzustand $S_2^{in}(k)$ des Slave-Knotens SL2 erhalten. Dieser Taktzählzustand entspricht wiederum dem gemessenen zweiten Taktzählzustand $TS\left(S_2^{in}(k)\right)$ des Slave-Knotens SL2. Anschließend wiederholt sich das oben beschriebene Verfahren, d.h. eine neue Synchronisationsnachricht SY(k) wird zu dem nächsten Slave-Knoten usw. gesendet, bis alle N Slave-Knoten in dem Kommunikationsnetz eine Synchronisationsnachricht erhalten haben. Wie sich aus Fig. 2 ergibt, sind die gemessenen zweiten Taktzählzustände (d.h. die Zeitstempel TS der entsprechenden zweiten Taktzählzustände der jeweiligen Slave-Knoten) mit entsprechenden ersten Taktzählzuständen der Referenzuhr verknüpft, wobei diese ersten Taktzählzustände durch Variablen bezeichnet werden, welche mit dem Buchstaben "x" entlang der ersten vertikalen Linie beginnen. Analog sind die wahren zweiten Taktzählzustände mit entsprechenden wahren ersten Taktzählzuständen verknüpft, welche in Fig. 2 durch entsprechende Variablen bezeichnet werden, welche entlang der ersten vertikalen Linie mit dem Buchstaben "M" beginnen.

Bei der anhand von Fig. 1 und Fig. 2 beschriebenen Synchronisation tritt das Problem auf, dass bei der zeitlichen Abstimmung der einzelnen Uhren aufeinander Unsicherheiten auftreten, welche durch Messfehler, Fluktuationen, Quantisierungsfehler, zufälligen Frequenzdrifts und dergleichen verursacht werden. Aufgrund dieser Fehler ist die Synchronisation der internen Uhren der Slave-Knoten auf die Referenzuhr des Master-Knotens oftmals nicht hinreichend genau, was in solchen Anwendungen problematisch ist, welche eine genaue Abstimmung der Uhren bei der Durchführung von kombinierten Prozessen über die Knoten des Netzes erfordern. Insbesondere im Bereich von industriellen Automatisierungsprozessen ist eine exakte Synchronisation der Uhren zwischen den Knoten sehr wichtig.

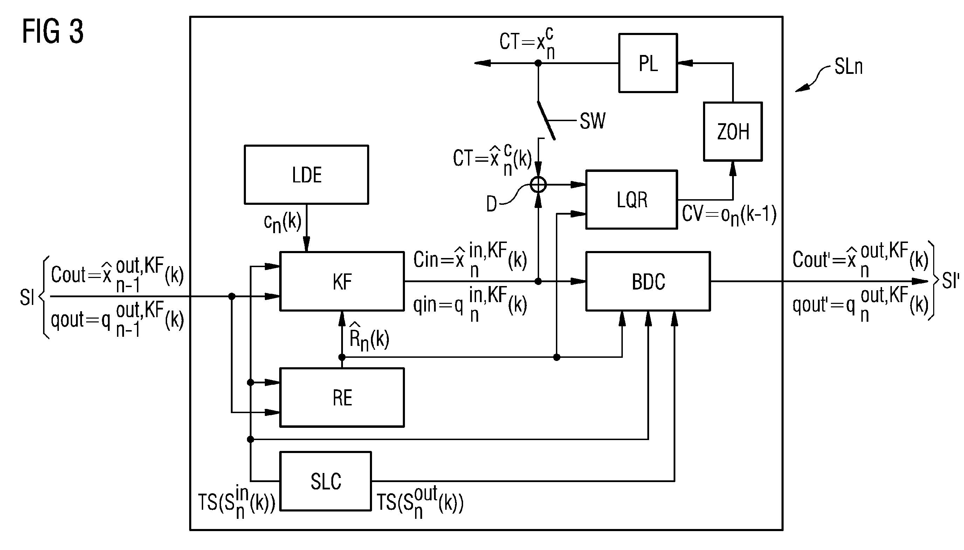

Um eine solche exakte Synchronisation zu erreichen, wird in der nachfolgend beschriebenen Ausführungsform des erfindungsgemäßen Verfahrens in den jeweiligen zweiten Knoten ein stochastischer Zustandsschätzer in der Form eines Kalman-Filters mit einem Regelkreis basierend auf einem sog. Linear-Quadratischen Regulator kombiniert, wie im Folgenden anhand von Fig. 3 näher erläutert wird. Zunächst werden jedoch einige Definitionen eingeführt, welche in der nachfolgenden Beschreibung der Fig. 3 verwendet werden.

Die Definitionen lauten wie folgt:

*TS(x):* Zeitstempel der lokalen Zeit eines Knotens mit dem entsprechenden Taktzählzustand x.

*$R_n(k)$*: Das k-te RFC-Verhältnis, d.h. das Frequenzverhältnis der Referenztaktfrequenz der Referenzuhr zur Taktfrequenz der internen Uhr des Slave-Knotens SLn im k-ten Synchronisationszyklus.

$M(k)$: Der tatsächliche erste Taktzählzustand, wenn die k-te Synchronisationsnachricht (d.h. die Synchronisationsnachricht im k-ten Synchronisationszyklus) von dem Master-Knoten ausgesendet wird, wobei zu diesem ersten Taktzählzustand der gemessene Taktzählzustand **$TS(M(k))$** gehört. $S_n^{\mathrm{in}}(k)$: Der tatsächliche zweite Taktzählzustand des Slave-Knotens SLn, wenn die k-te Synchronisationsnachricht im Slave-Knoten SLn ankommt, wobei zu diesem zweiten Taktzählzustand der gemessene zweite Taktzählzustand $TS\left(S_n^{\mathrm{in}}(k)\right)$ gehört. $x_n^{\mathrm{in}}(k)$: Der erste Taktzählzustand des Master-Knotens zu dem Zeitpunkt, wenn der zweite Taktzählzustand des Slave-Knotens SLn tatsächlich den Wert $TS(S_n^{\mathrm{in}}(k))$ aufweist. $S_n^{\mathrm{out}}(k)$: Der tatsächliche zweite Taktzählzustandwert des Slave-Knotens SLn, wenn die k-te Synchronisationsnachricht von dem Slave-Knoten SLn ausgesendet wird, wobei zu diesem zweiten Taktzählzustand der gemessene zweite Taktzählzustand $TS(S_n^{\mathrm{out}}(k))$ gehört. $x_n^{\mathrm{out}}(k)$: Der erste Taktzählzustand des Master-Knotens zu dem Zeitpunkt, wenn der zweite Taktzählzustand des Slave-Knotens SLn tatsächlich $TS(S_n^{\mathrm{out}}(k))$ beträgt. $a_n(k) = TS(S_n^{\mathrm{in}}(k)) - TS(S_n^{\mathrm{in}}(k-1))$: Die lokale Zeitdifferenz zwischen dem Eintreffen zweier aufeinander folgender Synchronisationsnachrichten in dem Slave-Knoten SLn, gemessen in zweiten Taktzählzuständen der internen Uhr des Slave-Knotens SLn. $b_n(k) = TS(S_n^{\mathrm{out}}(k)) - TS(S_n^{\mathrm{in}}(k))$: Die Bridge-Delay in der lokalen Zeit gemäß den zweiten Taktzählzuständen des Slave-Knotens SLn.

$c_n(k)$: Die Line-Delay, geschätzt in der lokalen Zeit gemäß den zweiten Taktzählzuständen des Slave-Knotens SLn.

$v_n(k)$: Eine Gaußsche Zufallsvariable, welche die kombinierten Effekte von allen Unsicherheiten in den Zeitmessungen enthält. Die Gaußsche Zufallsvariable $v_n(k)$ entspricht dabei der in den Druckschriften [1] und [2] definierten Zufallsvariable. Es wird im Folgenden noch an weiteren Stellen auf Herleitungen verwiesen, welche bereits in den oben erwähnten Referenzen [1] und [2] durchgeführt wurden. Der gesamte Offenbarungsgehalt dieser Druckschriften wird deshalb durch Verweis zum Inhalt der vorliegenden Anmeldung gemacht.

Fig. 3 zeigt in schematischer Darstellung den Aufbau des n-ten Slave-Knotens SLn, der in der Kette der ausgehend vom Master-Knoten übertragenen Synchronisationsnachrichten an der n-ten Stelle liegt. In dem Szenario der Fig. 3 empfängt der Slave-Knoten SLn eine Synchronisationsnachricht, welche entsprechende Synchronisationsinformationen SI enthält und sendet nach der im Folgenden beschriebenen Verarbeitung eine neue Synchronisationsnachricht mit entsprechender Synchronisationsinformation SI' aus. Die in Fig. 1 gezeigten Komponenten ermöglichen dabei die Generierung einer synchronisierten geregelten Zeit, welche als CT bezeichnet ist. Demgegenüber ist die interne freilaufende Uhr des Slave-Knotens SLn in Fig. 1 mit SLC bezeichnet. Im Folgenden bezeichnen Variablen, welche mit einem Dach versehen sind, Schätzwerte der jeweiligen Variablen.

Zum Abschätzen des ersten Taktzählzustands beim Empfang der Synchronisationsnachricht wird im Slave-Knoten SLn zunächst die Synchronisationsinformation SI der empfangenen Synchronisationsnachricht einem lokalen Kalman-Filter KF zugeführt. Die Synchronisationsinformation umfasst hierbei einen im vorhergehenden Slave-Knoten geschätzten ersten Taktzählzustand $Cout = \hat{x}_{n-1}^{\mathrm{out,KF}}(k)$ mit entsprechender Varianz $qout = q_{n-1}^{\mathrm{out,KF}}(k)$. Dieser geschätzte erste Taktzählzustand wird im vorhergehenden Slave-Knoten in der gleichen Weise ermittelt, wie der geschätzte erste Taktzählzustand im Slave-Knoten SLn für die Synchronisationsinformation SI' ermittelt wird. Der Kalman-Filter KF, dessen genereller Aufbau aus dem Stand der Technik bekannt ist, schätzt basierend auf einem Zustandsraummodell, welches weiter unten noch näher erläutert wird, den ersten Taktzählzustand $Cin = \hat{x}_n^{\mathrm{in,KF}}(k)$ mit entsprechender Varianz $qin = q_n^{\mathrm{in,KF}}(k)$ zum Zeitpunkt des Empfangs der Synchronisationsnachricht mit den Synchronisationsinformationen SI im Slave-Knoten SLn. Zur Durchführung der Schätzung mit dem Kalman-Filter werden als weitere Größen die geschätzte Line-Delay $c_n(k)$ verwendet, welche in einem Line-Delay-Schätzer LDE mit an sich bekannten Verfahren geschätzt wird. Ferner verwendet der Kalman-Filter KF mit der internen Uhr SLC gemessene Zeitstempel von zweiten Taktzählzuständen $TS\left(S_n^{\mathrm{in}}(k)\right)$, um basierend darauf die obige Größe $a_n(k) = TS(S_n^{\mathrm{in}}(k)) - TS(S_n^{\mathrm{in}}(k-1))$ zu bestimmen. Darüber hinaus fließt in den Kalman-Filter das im Slave-Knoten SLn geschätzte Taktverhältnis $\hat{R}_n(k)$ ein, welches das Verhältnis zwischen der Referenztaktfrequenz des Master-Knotens zu der Taktfrequenz der internen Uhr des Slave-Knotens SLn bezeichnet. Dieses Taktverhältnis wird in einem Schätzer RE ermittelt, wobei zu dessen Ermittlung wiederum zweite Taktzählzustände $TS\left(S_n^{\mathrm{in}}(k)\right)$ sowie die Variable Cout einfließen. Die Durchführung der Schätzung des Taktverhältnisses beruht auf einem an sich aus dem Stand der Technik bekannten Verfahren und wird weiter unten noch näher beschrieben.

Der geschätzte Wert Cin, einer der Ausgangsgrößen des Kalman-Filters KF, wird anschließend einem optimalen Linear-Quadratischen Regulator LQR zugeführt, der im Folgenden auch als LQR-Regler bezeichnet wird. Die LQR-Regelung ist dabei generell aus dem Stand der Technik bekannt und die spezielle Ausführungsform des in Fig. 3 verwendeten Reglers wird weiter unten noch näher mathematisch beschrieben. Der Regler LQR erhält über das Differenzglied D den geschätzten ersten Taktzählzustand Cin. Ferner verwendet der Regler das Taktverhältnis $\hat{R}_n(k)$. Die Stellgröße $CV=o_n(k-1)$ des Reglers repräsentiert dabei eine Schätzung des Taktverhältnisses und wird im Folgenden auch als Kompensationsfaktor bzw. OCF-Faktor (OCF = Offset Compensation Factor) bezeichnet. Diese diskrete Stellgröße, welche zum Zeitpunkt des Empfangs einer neuen Synchronisationsnachricht aktualisiert wird, wird einem ZOH-Glied zugeführt (ZOH = Zero Order Hold). Dieses Glied ist hinlänglich aus dem Stand der Technik bekannt und erzeugt aus den diskreten Werten des OCF-Faktors eine kontinuierliche Treppenfunktion. Der Ausgang des ZOH-Glieds wird schließlich der Regelstrecke PL (PL = Plant) zugeführt, aus der eine geregelte Zeit $CT = \hat{x}_n^C(k)$ in der Form eines geregelten ersten Taktzählzustands ermittelt wird, wobei durch die Dynamik der Regelstrecke die geregelte Zeit auch für Zwischenwerte zwischen den Zeitpunkten von zwei empfangenen Synchronisationsnachrichten angegeben wird (siehe Gleichung (19)). Der geregelte erste Taktzählzustand CT, der durch die Dynamik der Regelstrecke PL erhalten wird, ist der synchronisierte Taktzählzustand des Slave-Knotens. In Fig. 3 wird ferner durch einen Schalter SW wiedergegeben, dass der geregelte erste Taktzählzustand CT ferner dem Differenz-Glied D bei jeder Neuberechnung von Cin, ausgelöst durch eine neue empfangene Synchronisationsnachricht, zugeführt wird, wobei das Glied D die Differenz zwischen Cin und CT berechnet, welche anschließend dem LQR-Regler zugeführt wird.

Die gemäß Fig. 3 verwendete Kombination eines Kalman-Filters KF mit einem LQR-Regler LQR liefert einen optimalen Regler in dem Sinne, dass die Summe aus dem akkumulierten quadratischen Fehler zwischen dem tatsächlichen Master-Taktzählzustand und dem geregelten ersten Taktzählzustand und der gewichteten akkumulierten quadratischen Abweichung der Stellgröße von der Referenzstellgröße minimiert wird. Die Erfinder konnten zeigen, dass die Kombination einer Filterung des rauschbehafteten ersten Taktzählzustands in der Synchronisationsinformation SI mit dem Kalman-Filter und die Verwendung der Ausgabe des Kalman-Filters als Referenz für den LQR-Regler äquivalent ist zu einem sog. LQG-Regler (LQG = Linear Quadratic Gaussian), welcher der Zeit gemäß den wahren ersten Taktzählzuständen des Master-Knotens bei Vorhandensein von in seiner Gesamtheit Gaußschem Prozess- und Messrauschen optimal nachläuft. Ein LQG-Regler sowie das diesem Regler zu Grunde liegende Linear-Quadratische Gaußsche Kontrollproblem sind hinlänglich aus dem Stand der Technik bekannt und werden nicht weiter im Detail erläutert.

Damit der Slave-Knoten der Fig. 3 wieder eine geeignete Synchronisationsinformation für eine auszusendende Synchronisationsnachricht erzeugt, werden die Ausgaben Cin und qin des Kalman-Filters KF der Komponente BDC zugeführt, welche die Bridge-Delay kompensiert und somit aus dem geschätzten ersten Taktzählzustand $Cin = \hat{x}_n^{\text{in,KF}}(k)$ zum Zeitpunkt des Eingangs der Synchronisationsnachricht und der zugehörigen Varianz qin einen geschätzten ersten Taktzählzustand $Cout' = \hat{x}_n^{\text{out,KF}}(k)$ zum Zeitpunkt des Aussendens der nächsten Synchronisationsnachricht mit zugehöriger Varianz $qout' = q_n^{\text{out,KF}}(k)$ generiert. Diese generierten Werte werden als neue Synchronisationsinformation SI' in der durch den Slave-Knoten SLn ausgesendeten Synchronisationsnachricht integriert. Die durch die Komponente BDC durchgeführte Berechnung wird weiter unten näher erläutert. Es werden dabei neben der Ausgabe des Kalman-Filters KF ferner das geschätzte Taktverhältnis $\hat{R}_n(k)$ des Schätzers RE und in der lokalen Zeit des Slave-Knotens gemessene zweite Taktzählzustände (angedeutet durch $TS\left(S_n^{\text{in}}(k)\right)$ und $TS\left(S_n^{\text{out}}(k)\right)$) verwendet.

Im Folgenden werden die einzelnen, durch die Komponenten der Fig. 3 durchgeführten Berechnungen im Detail erläutert. Der Kalman-Filter KF beruht auf einem Zustandsraummodell, welches bereits in den Referenzen [1] und [2] als probabilistische Beschreibung von in dem System vorhandenen Unsicherheiten verwendet wurde. Dieses Zustandsraummodell umfasst die folgenden Gleichungen:

$$x_n^{\text{in}}(k) = x_n^{\text{in}}(k-1) + a_n(k) \cdot R_n(k) \tag{1}$$

$$x_n^{\text{out}}(k) = x_n^{\text{in}}(k) + b_n(k) \cdot R_n(k) \tag{2}$$

$$TS(M(k)) = x_1^{\text{in}}(k) - c_1(k) \cdot R_1(k) + v_1(k) \tag{3}$$

$$x_{n-1}^{\text{out}}(k) = x_n^{\text{in}}(k) - c_n(k) \cdot R_n(k) + v_n(k) \qquad (\text{für } n > 1) \qquad (4)$$

Die Gleichungen (1) bis (4) sind bereits in der Referenz [2] definiert.

Die Variablen in den obigen Gleichungen fallen in die folgenden Kategorien:

- $TS(M(k))$, $a_n(k)$, ($n = 1,...N$), $c_n(k)$, ($n = 1,...N$) und $b_{n-1}(k)$, ($n = 2,...N$) sind bekannte Variablen, welche im Vorangegangenen definiert wurden. Dabei stellen $a_n(k)$, $b_n(k)$ und **$c_n(k)$** lokale Zeitschätzungen des Intervalls zwischen zwei aufeinander folgenden Synchronisationsnachrichten bzw. der Bridge-Delay bzw. der Line-Delay dar.

- $x_n^{\text{in}}(k)$, $x_n^{\text{out}}(k)$ sind versteckte Zustandsvariablen und müssen abgeschätzt werden.

- $R_n(k)$ ist ein Parameter, der in einem getrennten Prozess geschätzt wird, wie weiter unten anhand von Gleichungen (5) und (6) dargelegt wird. Gegebenenfalls besteht auch die Möglichkeit, dass $R_n(k)$ zusammen mit $x_n^{\text{in}}(k)$ und $x_n^{\text{out}}(k)$ als versteckte Zustandsvariable abgeschätzt wird, wie dies auch in Patentanmeldung [1] beschrieben ist.

- $v_n(k)$ ist eine Gaußsche Zufallsvariable mit $v_n(k) \sim N(0, \sigma_v^2)$ und geeignet gewählter Varianz $\sigma_v^2$, $\sigma_v^2$, wobei die Varianz gemäß der im Knoten verwendeten Hardware und Software festgelegt wird. Die Festlegung dieser Varianz liegt im Rahmen von fachmännischem Handeln. $v_n(k)$ modelliert die Unsicherheiten von Fehlern bei der Zeitmessung (sog. Stamping Errors) und bei der Bestimmung der Line-Delay. Eine Herleitung für den Ausdruck $v_n(k)$ findet sich in den Referenzen [1] und [2].

Wie sich aus Fig. 3 ergibt, wird bei der Kalman-Filterung ein geschätztes Taktverhältnis $\hat{R}_n(k)$ verwendet. Die Schätzung dieses Taktverhältnisses in der Komponente RE erfolgt dabei unter Verwendung des folgenden Ausdrucks:

$$\hat{r}_n^{\text{pre}}(k) = \frac{\hat{x}_{n-1}^{\text{out,KF}}(k) - \hat{x}_{n-1}^{\text{out,KF}}(k-1)}{TS(S_n^{\text{in}}(k)) - TS(S_n^{\text{in}}(k-1))}, \quad n > 1 \qquad (5)$$

Dabei entspricht $\hat{x}_{n-1}^{\text{out,KF}}(k)$ dem abgeschätzten ersten Taktzählzustand in der empfangenen Synchronisationsinformation SI, welcher über einen Kalman-Filter des vorhergehenden Slave-Knotens ermittelt wurde. Die Berechnung von $\hat{x}_{n-1}^{\text{out,KF}}(k)$ wird weiter unten erläutert. Für den ersten Slave-Knoten SL1, der eine Synchronisationsnachricht empfängt, gilt: $\hat{x}_{n-1}^{\text{out,KF}}(k) = TS(M(k))$. Zur endgültigen Berechnung des geschätzten Taktverhältnisses $\hat{R}_n(k)$ werden aufeinander folgende, gemäß Gleichung (5) erhaltene Abschätzungen wie folgt gemittelt:

$$\hat{R}_n(k) = \frac{1}{L} \sum_{l=0}^{L-1} \hat{r}_n^{\text{pre}}(k-l) \qquad (6)$$

Auf diese Weise wird eine bessere Schätzung generiert. Die Unsicherheit der Schätzung wird wiederum durch eine Gaußsche Zufallsvariable $\eta \sim N(0, \sigma_\eta^2)$ modelliert, wobei die Wahl der Varianz $\sigma_\eta^2$ wiederum im Rahmen von fachmännischem handeln liegt. Auf diese Weise wird folgender Zusammenhang zwischen dem wahren Taktverhältnis $R_n(k)$ und dem geschätzten Taktverhältnis $\hat{R}_n(k)$ erhalten:

$$R_n(k) = \hat{R}_n(k) + \eta_n(k) \qquad (7)$$

Unter Verwendung der obigen Gleichung (7) wird dann folgendes Zustandsraummodell für den Kalman-Filter KF der Fig. 3 verwendet:

Zustands-Übergangs-Modell:

$$x_n^{\ in}(k) = x_n^{\ in}(k-1) + a_n(k) \cdot \hat{R}_n(k) + a_n(k) \cdot \eta_n^a(k) \qquad (8)$$

Beobachtungsmodell:

$$x_{n-1}^{\ out}(k) = x_n^{\ in}(k) - c_n(k) \cdot \hat{R}_n(k) - c_n(k) \cdot \eta_n^c(k) + v_n(k) \qquad (9)$$

Dabei gilt für $x_0^{out}(k) = TS(M(k))$, so dass die obige Gleichung (9) verwendet werden kann, um den Ausdruck gemäß den Gleichungen (3) und (4) als eine Gleichung auszudrücken. Über die hochgestellten Bezeichnungen a und c wird dabei zum Ausdruck gebracht, dass die beiden Rauschterme $\eta_n^a(k)$ und $\eta_n^c(k)$ möglicherweise unabhängig voneinander und identisch verteilte Zufallsvariablen sind, welche aus der gleichen Verteilung $\eta \sim N(0, \sigma_\eta^2)$ der Gleichung (7) abgeleitet sind. Die in dem Beobachtungsmodell eines Kalman-Filters verwendete Observable ist klassischer Weise eine tatsächlich beobachtete Größe, welche wirklich im System mit dazugehörigem Rauschen beobachtet wird. In der hier beschriebenen Synchronisation sollte als Observable die Größe $x_{n-1}^{out}(k)$ verwendet werden, d.h. die Masterzeit zum Zeitpunkt, zu dem der vorhergehende Slave-Knoten die Synchronisationsnachricht SY(k) sendet, welche aber keine beobachtete Größe im herkömmlichen Sinne ist. Daher wird stattdessen die beste verfügbare Schätzung dafür verwendet, nämlich ein vom vorhergehenden Slave-Knoten abgeschätzter erster Taktzählzustand. Nichtsdestotrotz wird diese Größe in dem hier verwendeten Kalman-Filter als Observable behandelt, da sie die einzige "Beobachtung" ist, die zum Zeitpunkt des Empfangs der Synchronisationsnachricht zur Verfügung steht. Der geschätzte Wert der Observablen wird im Folgenden als $\hat{x}_{n-1}^{out}(k)$ bezeichnet.

Nachfolgend wird die basierend auf den obigen Gleichungen (8) und (9) durchgeführte Kalman-Filterung dargelegt, wobei die durchgeführten Schritte dem Fachmann an sich geläufig sind, jedoch zur Verdeutlichung erläutert werden.

Gemäß dem Kalman-Filter wird zunächst ein Zustand wie folgt vorhergesagt:

$$\hat{x}_n^{\text{in,KF}}(k, k-1) = \hat{x}_n^{\text{in,KF}}(k-1, k-1) + a_n(k) \cdot \hat{R}_n(k) \qquad (10)$$

Die vorhergesagte geschätzte Varianz lautet dabei wie folgt:

$$q_n^{\text{in,KF}}(k, k-1) = q_n^{\text{in,KF}}(k-1, k-1) + a_n^2(k) \cdot \sigma_\eta^2 \qquad (11)$$

Anschließend wird die sog. Innovation bzw. das Messresidual (Differenz zwischen der tatsächlichen Beobachtung und der Prädiktion gemäß dem Beobachtungsmodell) wie folgt bestimmt:

$$z_n(k) = \hat{x}_{n-1}^{\text{out}}(k) - \left( \hat{x}_n^{\text{in,KF}}(k, k-1) - c_n(k) \cdot \hat{R}_n(k) \right) \qquad (12)$$

Die Residualvarianz lautet dabei wie folgt:

$$s_n(k) = q_{n-1}^{\text{out,KF}}(k, k) + q_n^{\text{in,KF}}(k, k-1) + c_n^2(k) \cdot \sigma_\eta^2 + \sigma_v^2 \qquad (13)$$

Basierend auf dem optimalen Kalman-Gain

$$g_n^{\text{KF}}(k) = \frac{q_n^{\text{in,KF}}(k, k-1)}{s_n(k)} \qquad (14)$$

ergibt sich folgender aktualisierter Wert für die Zustandsschätzung:

$$\hat{x}_n^{\mathrm{in,KF}}(k,k) = \hat{x}_n^{\mathrm{in,KF}}(k,k-1) + g_n^{\mathrm{KF}}(k) \cdot z_n(k) \qquad (15)$$

Die Varianz für diese aktualisierte Zustandsschätzung lautet dabei wie folgt:

$$q_n^{\mathrm{in,KF}}(k,k) = \left(1 - g_n^{\mathrm{KF}}(k)\right) \cdot q_n^{\mathrm{in,KF}}(k,k-1) \qquad (16)$$

Die gemäß Gleichung (15) und (16) erhaltenen Werte entsprechen der Ausgabe Cin bzw. qin des Kalman-Filters KF der Fig. 3.

Die Ausgaben Cin und qin werden gemäß Fig. 3 unter anderem der Komponente BDC zugeführt, welche unter Berücksichtigung der Bridge-Delay entsprechende Ausgaben zum Zeitpunkt des Aussendens der Synchronisationsnachricht durch den Slave-Knoten SLn ermittelt. In der Komponente BDC wird dabei die Bridge-Delay $b_n(k)$ unter Ver-wendung entsprechender gemessener zweiter Taktzählzustände wie folgt ermittelt:

$$b_n(k) = TS(S_n^{\mathrm{out}}(k)) - TS(S_n^{\mathrm{in}}(k))$$

Mit Hilfe dieser Bridge-Delay errechnet dann die Komponente BDC unter Verwendung des geschätzten Taktverhältnisses des Schätzers RE den ersten Taktzählzustand beim Aussenden der Synchronisationsnachricht wie folgt:

$$\hat{x}_n^{\mathrm{out,KF}}(k,k) = \hat{x}_n^{\mathrm{in,KF}}(k,k) + b_n(k) \cdot \hat{R}_n(k) \qquad (17)$$

Die geschätzte Varianz lautet dabei wie folgt:

$$q_n^{\mathrm{out,KF}}(k,k) = q_n^{\mathrm{in,KF}}(k,k) + b_n^2(k) \cdot \sigma_\eta^2 \qquad (18)$$

Die Werte gemäß Gleichungen (17) und (18) werden anschließend als entsprechende Werte Cout' und qout' in der Synchronisationsinformation SI' der ausgesendeten Synchronisationsnachricht integriert. Im Fall von n=1 sendet der Master-Knoten die folgenden Werte an den ersten Slave-Knoten: $\hat{x}_0^{out,KF}(k,k) = TS(M(k))$ und $q_0^{out,KF}(k,k) = 0$.

Im Folgenden wird nunmehr die durch den LQR-Regler LQR durchgeführte Regelung im Detail erläutert. Gemäß der Regelung wird erreicht, dass zusätzlich zu den zweiten Taktzählzuständen $S_n$ gemäß der internen Uhr des Slave-Knotens SLn der geregelte Taktzählzustand $CT = \hat{x}_n^{\mathrm{C}}(k)$ erzeugt wird. Daraus kann die synchronisierte Zeit mit Hilfe der kontinuierlichen Dynamik der Regelstrecke PL der Fig. 3 für jede lokale Zeit $S_n$ des Slave-Knotens SLn wie folgt berechnet werden:

$$x_n^C = \hat{x}_n^{\mathrm{C}}(k) + o_n(k) \cdot \left(S_n - TS(S_n^{\mathrm{in}}(k))\right) \qquad (19)$$

für

$$TS(S_n^{\mathrm{in}}(k)) \le S_n < TS(S_n^{\mathrm{in}}(k+1))$$

Dabei bezeichnet $o_n(k)$ den OCF-Faktor zum Zeitpunkt k (d.h. bei Erhalt der k-ten Synchronisationsnachricht). Der OCF-Faktor wird durch den LQR-Regler LQR des Slave-Knotens SLn erzeugt und basiert auf dem Referenzsignal, welches der Regler von dem Kalman-Filter KF erhält (siehe Fig. 3). Da dieses Referenzsignal nur nach dem Empfang einer neuen Synchronisationsnachricht aktualisiert wird, kann der LQR-Regler auch zeitdiskret ausgestaltet sein. Die diskrete Stellgröße zu jedem Zeitpunkt k, wenn die k-te Synchronisationsnachricht in dem Slave-Knoten ankommt, wird auf die kontinuierliche Regelstrecke über das ZOH-Glied ZOH der Fig. 3 angewendet. Die kontinuierlich geregelte Zeit wird nach jeder Ankunft einer Synchronisationsnachricht abgetastet, was zu folgender diskreter Dynamik der Regelstrecke führt:

$$\hat{x}_n^{\mathrm{C}}(k) = \hat{x}_n^{\mathrm{C}}(k-1) + o_n(k-1) \cdot a_n(k) \qquad (20)$$

Basierend auf dieser diskreten Dynamik der Regelstrecke wird nunmehr der LQR-Regler realisiert, wobei die obige Gleichung (19) verwendet werden kann, um die geregelte Zeit zu jedem Zeitpunkt zwischen der Ankunft von zwei aufeinander folgenden Synchronisationsnachrichten zu berechnen.

In der hier beschriebenen Ausführungsform wird der LQR-Regler zum Berechnen der optimalen Kontroll-Sequenz $\left\{ o_n(k) \right\}_{k=0}^{K-1}$ verwendet, um der Ausgabe des Kalman-Filters KF zu folgen. Die Kontrollsequenz ist dabei so gewählt, dass die folgende LQR-Kostenfunktion minimiert wird:

$$J(\mathbf{o}) = \sum_{k=1}^{K} \left( \hat{x}_n^{\mathrm{in,KF}}(k,k) - \hat{x}_n^{\mathrm{C}}(k) \right)^2 + \sum_{k=1}^{K} r \cdot \left( o_n(k) - \hat{R}_n(k) \right)^2 \qquad (21)$$

Dies bedeutet, dass die Abweichung der geregelten Zeit von der Referenzzeit und die Abweichung der Stellgröße von der "Referenz-Stellgröße" $\hat{R}_n(k)$ minimiert werden soll. Die Variable r stellt einen Gewichtungsfaktor dar, der durch den Fachmann geeignet festgelegt werden kann. Da der LQR-Regler ein linearer Zustandsregler mit Feedback ist, gilt folgender Zusammenhang, wie allgemein für lineare Zustandsregler:

$$o_n(k) - \hat{R}_n(k) = k^{\mathrm{LQR}} \cdot \left( \hat{x}_n^{\mathrm{C}}(k) - \hat{x}_n^{\mathrm{in,KF}}(k,k) \right) \qquad (22)$$

Zur Berechnung des OCF-Faktors gemäß Gleichung (22) muss das sog. Feedback-Gain $k^{\mathrm{LQR}}$ berechnet werden. Im Falle eines LQR-Reglers ist das Feedback-Gain, welches die Kostenfunktion gemäß Gleichung (21) minimiert, gegeben durch:

$$k^{\mathrm{LQR}} = -\frac{a_n \cdot p}{r + a_n^2 \cdot p} \qquad (23)$$

Dabei ist p die Lösung der zugeordneten diskreten algebraischen Riccati-Gleichung, d.h. es gilt:

$$p = 1 + p - \frac{a_n^2 \cdot p^2}{r + a_n^2 p} \qquad (24)$$

Es wird dabei angenommen, dass $a_n(k) = a_n$ immer konstant ist. Die Lösung der Gleichung (24) führt zu folgendem Ausdruck:

$$p = \frac{a_n \pm \sqrt{a_n^2 + 4r}}{2a_n} \qquad (25)$$

Jedoch sollte p positiv-definit sein, d.h. es gilt:

$$p = \frac{a_n + \sqrt{a_n^2 + 4r}}{2a_n} \qquad (26)$$

Das Einsetzen dieses Ergebnisses in die obige Gleichung (23) führt zu folgendem Ausdruck für $k^{\mathrm{LQR}}$ :

$$k^{\mathrm{LQR}} = -\frac{a_n \cdot p}{r + a_n^2 \cdot p} = -\frac{1}{\dfrac{r}{a_n \cdot p} + a_n} = -\frac{1}{\dfrac{2r}{a_n + \sqrt{a_n^2 + 4r}} + a_n} \qquad (27)$$

Unter der Verwendung der Definition:

$$\beta = \frac{2r}{a_n + \sqrt{a_n^2 + 4r}} \qquad (28)$$

kann das LQR-Feedback-Gain wie folgt geschrieben werden:

$$k^{\mathrm{LQR}} = -\frac{1}{\beta + a_n} \qquad (29)$$

$\beta$ ist dabei ein positiver Wert zwischen Null und unendlich und es liegt im Rahmen von fachmännischem Handeln für einen LQR-Regler einen geeigneten Wert für $\beta$ festzulegen. In der hier betrachteten Problemstellung hat sich ein Wert von $\beta$ zwischen 5 und 20 als geeignet erwiesen.

Indem schließlich die obige Gleichung (29) in die Gleichung (22) eingesetzt wird, erhält man folgende optimale Wahl für die Stellgröße in der Form des OCF-Faktors:

$$o_n(k) = \hat{R}_n(k) + \frac{(\hat{x}_n^{\mathrm{in,KF}}(k,k) - \hat{x}_n^{\mathrm{C}}(k))}{\beta + a_n} \qquad (30)$$

Dabei ist $a_n$ das Kontrollintervall in der lokalen Zeit des Slave-Knotens SLn, wobei als Wert für $a_n$ das nominale Synchronisationsintervall zwischen zwei aufeinander folgenden Synchronisationsnachrichten verwendet werden kann, welches konstant ist. Die Variable $\hat{R}_n(k)$ ist durch die obige Gleichung (6) gegeben und die Variable $\hat{x}_n^{\mathrm{in,KF}}(k,k)$ ist durch die obige Gleichung (15) gegeben. Der Parameter $\beta$ reguliert die Größe der Fluktuationen in der Stellgröße $o_n(k)$. Wird $\beta$ klein gewählt, reagiert der LQR-Regler schneller auf Fehler, was jedoch zu großen Oszillationen führen kann. Falls $\beta$ größer gewählt wird, konvergiert die geregelte Zeit langsam hin zur Zeit gemäß der Referenzuhr des Master-Knotens, jedoch ist die Fluktuation nach der Konvergenz kleiner. Wie bereits erwähnt, liegt eine geeignete Wahl von $\beta$ im Rahmen von fachmännischem Handeln.

Mit der im Vorangegangenen beschriebenen Ausführungsform des erfindungsgemäßen Verfahrens können sich die jeweiligen Slave-Knoten über eine mittels eines LQR-Reglers geregelte lokale Zeit auf die Zeit des Master-Knotens synchronisieren. Dabei wird über den Inhalt der Synchronisationsnachrichten eine Schätzung des ersten Taktzählzustands des Master-Slaves mit zugehöriger geschätzter Varianz zum nächsten Knoten propagiert. Innerhalb eines jeweiligen Slave-Knotens wird dessen lokale Zeit unter Verwendung des LQR-Reglers optimal gesteuert, wobei durch die Kombination des verwendeten Kalman-Filters mit dem LQR-Regler ein optimaler LQG-Regler erhalten wird, wie die Erfinder mathematisch nachweisen konnten.

Literaturverzeichnis:

[1] Europäische Patentanmeldung Nr. 09 012 028.8

[2] C. Na, R. L. Scheiterer, D. Obradovic, A Kalman Filter Approach To Clock Synchronization Of Cascaded Network Elements, 1st IFAC Workshop on Estimation and Control of Networked Systems (NecSys'09), 24.-26. September, 2009, Venedig, Italien.

[3] J. Nilsson et al.: "LQG control over a Markov communication network", Decision and Control, 1997, Proceedings of the 36th IEEE Conference, San Diego, CA, USA, 10. bis 12. Dezember 1997, New York, NY, USA, IEEE, US, Bd. 5, 10. Dezember 1997, Seiten 4586 bis 4591.

[4] EP 2 020 766 A1

**Patentansprüche**

1. Verfahren zur Zeitsynchronisation in einem Kommunikationsnetz mit einer Mehrzahl von Knoten (MA, SL1, SL2, SLn), wobei die Knoten (MA, SL1, SL2, SLn) einen ersten Knoten (MA) und einen oder mehrere zweite Knoten (SL1, SL2, SLn) umfassen, wobei der erste Knoten (MA) erste Taktzählzustände gemäß einer Referenztaktfrequenz generiert und der oder die zweiten Knoten (SL1, SL2, SLn) jeweils zweite Taktzählzustände gemäß einer internen Taktfrequenz generieren, wobei eine Zeitsynchronisation in aufeinander folgenden Synchronisationszyklen durchgeführt wird, in denen jeweils Synchronisationsnachrichten (SY(k)) ausgehend von dem ersten Knoten (MA) aufeinander folgend von einem Knoten (MA, SL1, SL2, SLn) zu einem weiteren Knoten (MA, SL1, SL2, SLn) übertragen werden und eine von einem Knoten (MA, SL1, SL2, SLn) ausgesendete Synchronisationsnachricht (SY(k)) eine Information (SI, SI') enthält, welche zur Zeitsynchronisation im die Synchronisationsnachricht (SY(k)) empfangenden Knoten (SL1, SL2, SLn) verwendet wird, wobei
eine Zeitsynchronisation in einem jeweiligen zweiten Knoten (SLn) zumindest eines Teils der zweiten Knoten (SL1, SL2, Sln) derart durchgeführt wird, dass in einem Schritt i) ein erster Taktzählzustand (Cin), der einem in dem jeweiligen zweiten Knoten (SLn) gemessenen zweiten Taktzählzustand (TS($S_n^{in}$(k)) entspricht, basierend auf einem Schätzverfahren mit Hilfe der Information (SI, SI') in einer empfangenen Synchronisationsnachricht (SY(k)) abgeschätzt wird;
**dadurch gekennzeichnet, dass** die Zeitsynchronisation einen Schritt ii) enthält, wonach aus dem abgeschätzten ersten Taktzählzustand (Cin) mithilfe eines Linear-Quadratischen Regulators (LQR) ein geregelter erster Taktzählzustand (CT) basierend auf einer Regelstrecke (PL) ermittelt wird, welche als Stellgröße (CV) einen Kompensationsfaktor enthält, welcher ein aktuelles Taktverhältnis der Referenztaktfrequenz zur internen Taktfrequenz des jeweiligen zweiten Knotens (SLn) schätzt, wobei der geregelte erste Taktzählzustand (CT) die synchronisierte Zeit darstellt.

2. Verfahren nach Anspruch 1, bei dem die Stellgröße (CV) nach jedem Empfang einer Synchronisationsnachricht (SY(K)) in dem jeweiligen zweiten Knoten (SLn) aktualisiert wird und der Regelstrecke (PL), vorzugsweise über ein Zero-Order-Hold-Glied (ZOH), zugeführt wird.

3. Verfahren nach Anspruch 2, bei dem die Regelstrecke (PL) für den Linear-Quadratischen Regulator (LQR) zum Zeitpunkt des Empfangs einer Synchronisationsnachricht (SY(k)) im k-ten Synchronisationszyklus im n-ten zweiten Knoten (SLn) und unmittelbar vor einer Aktualisierung der Stellgröße (CV) wie folgt lautet:

$$\hat{x}_n^C(k) = \hat{x}_n^C(k-1) + o_n(k-1) \cdot a_n(k)$$

wobei $\hat{x}_n^C(k)$ der geregelte erste Taktzählzustand (CT) zum Zeitpunkt des Empfangs der Synchronisationsnachricht (SY(k)) im k-ten Synchronisationszyklus ist;
wobei $o_n(k$-1) der im (k-1)-ten Synchronisationszyklus verwendete Kompensationsfaktor ist;
wobei $a_n(k)$ die Zeitdifferenz zwischen zwei aufeinander folgend im jeweiligen zweiten Knoten (SLn) empfangenen Synchronisationsnachrichten (SY(k)) ist, angegeben in zweiten Taktzählzuständen gemäß der internen Taktfrequenz des n-ten zweiten Knotens (SLn).

4. Verfahren nach Anspruch 3, bei dem die Regelstrecke (PL) für den Linear-Quadratischen Regulator (LQR) nach einer Aktualisierung der Stellgröße (CV) zum Zeitpunkt des Empfangs der Synchronisationsnachricht (SY(k)) im k-ten Synchronisationszyklus im n-ten zweiten Knoten (SLn) bis zur nächsten Aktualisierung der Stellgröße (CV) wie folgt lautet:

$$x_n^C = \hat{x}_n^C(k) + o_n(k) \cdot \left( S_n - TS(S_n^{in}(k)) \right)$$

wobei $x_n^C$ der geregelte erste Taktzählzustand zum Zeitpunkt eines gemessenen zweiten Taktzählzustands $S_n$ des jeweiligen zweiten Knotens (SLn) zwischen den beiden Aktualisierungen ist;

wobei $TS(S_n^{\text{in}}(k))$ der gemessene zweite Taktzählzustand des jeweiligen zweiten Knotens (SLn) zum Zeitpunkt des Empfangs der Synchronisationsnachricht (SY(k)) im k-ten Synchronisationszyklus ist.

5. Verfahren nach Anspruch 3 oder 4, bei dem der Kompensationsfaktor $o_n(k)$ für den k-ten Synchronisationszyklus gegeben ist durch:

$$o_n(k) = \hat{R}_n(k) + \frac{(\hat{x}_n^{\text{in}} - \hat{x}_n^C(k))}{\beta + a_n(k)}$$

wobei $\hat{R}_n(k)$ ein geschätzter Wert für das Taktverhältnis der Referenztaktfrequenz zur internen Taktfrequenz des n-ten zweiten Knotens (SLn) ist;

wobei $\hat{x}_n^{\text{in}}$ der in Schritt i) abgeschätzte erste Taktzählzustand (Cin) ist;

wobei $\beta$ ein positiver Faktor ist, der vorzugsweise zwischen 5 und 20 liegt.

6. Verfahren nach einem der vorhergehenden Ansprüche, bei dem der erste Taktzählzustand (Cin) in Schritt i) mit einem Schätzverfahren in der Form eines stochastischen Zustandsschätzers (KF) und insbesondere eines Kalman-Filters abgeschätzt wird.

7. Verfahren nach Anspruch 6, bei dem der erste Taktzählzustand (Cin) mit einem Schätzverfahren in der Form eines Kalman-Filters (KF) abgeschätzt wird, das als Zustand den ersten Taktzählzustand (Cin) zum Empfangszeitpunkt einer Synchronisationsnachricht (SY(k)) in dem jeweiligen zweiten Knoten (SLn) und eine zugehörige stochastische Varianz (qin) abschätzt und als eine Observable die Information (SI, SI') in der empfangenen Synchronisationsnachricht (SY(k)) verwendet.

8. Verfahren nach Anspruch 7, bei dem die Information (SI, SI') in einer Synchronisationsnachricht (SY(k)) einen abgeschätzten ersten Taktzählzustand (Cout, Cout') zum Aussende-Zeitpunkt der Synchronisationsnachricht (SY(k)) in dem jeweiligen zweiten Knoten (SLn) und eine zugehörige stochastische Varianz (qout, qout') umfasst.

9. Verfahren nach Anspruch 8, bei dem folgendes Zustandsraummodell für das Kalman-Filter (KF) im n-ten zweiten Knoten (SLn) für den k-ten Synchronisationszyklus verwendet wird:

$$x_n^{\text{in}}(k) = x_n^{\text{in}}(k-1) + a_n(k) \cdot \hat{R}_n(k) + a_n(k) \cdot \eta_n^a(k)$$

$$x_{n-1}^{out}(k) = x_n^{in}(k) - c_n(k) \cdot \hat{R}_n(k) - c_n(k) \cdot \eta_n^c(k) + v_n(k)$$

wobei $x_n^{\text{in}}(k)$ der erste Taktzählzustand zum Empfangszeitpunkt der Synchronisationsnachricht (SY(k)) in dem n-ten zweiten Knoten im k-ten Synchronisationszyklus ist;

wobei $x_{n-1}^{\text{out}}(k)$ der erste Taktzählzustand zum Aussende-Zeitpunkt der Synchronisationsnachricht (SY(k)) in dem (n-1)-ten zweiten Knoten (SLn) oder im ersten Knoten (MA) im k-ten Synchronisationszyklus ist;

wobei $a_n(k)$ die Zeitdifferenz zwischen zwei aufeinander folgend im n-ten zweiten Knoten (SLn) empfangenen Synchronisationsnachrichten (SY(k)) ist, angegeben in zweiten Taktzählzuständen gemäß der internen Taktfrequenz des n-ten zweiten Knotens (SLn);

wobei $\hat{R}_n(k)$ ein geschätzter Wert für das Taktverhältnis der Referenztaktfrequenz zur internen Taktfrequenz des n-ten zweiten Knotens (SLn) ist;

wobei $c_n(k)$ eine geschätzte Verzögerungszeit zwischen dem Aussende-Zeitpunkt der vom (n-1)-ten zweiten Knoten ausgesendeten Synchronisationsnachricht (SY(k)) und dem Empfangszeitpunkt dieser Synchronisationsnachricht (SY(k)) im n-ten zweiten Knoten (SLn) ist, angegeben in zweiten Taktzählzuständen gemäß der internen Taktfrequenz des n-ten zweiten Knotens (SLn);

wobei $\eta_n^a(k)$ , $\eta_n^c(k)$ und $v_n(k)$ Gaußsche Rauschterme sind.

10. Verfahren nach Anspruch 8 oder 9, bei dem aus dem durch das Kalman-Filter abgeschätzten ersten Taktzählzustand (Cin) zum Empfangszeitpunkt einer Synchronisationsnachricht (SY(k)) in dem jeweiligen zweiten Knoten (SLn) und der zugehörigen stochastischen Varianz (qin) der abgeschätzte erste Taktzählzustand (Cout') zum Aussende-Zeitpunkt der nachfolgenden Synchronisationsnachricht (SY(k)) in dem jeweiligen zweiten Knoten (SLn) und die zugehörige stochastische Varianz (qout') mit Hilfe einer Knoten-Verarbeitungszeit berechnet werden und in die nachfolgende Synchronisationsnachricht (SY(k)) eingefügt werden, wobei die Knoten-Verarbeitungszeit eine in dem jeweiligen zweiten Knoten (SLn) geschätzte Verzögerungszeit zwischen dem Empfang der in dem jeweiligen zweiten Knoten (SLn) empfangenen Synchronisationsnachricht (SY(k)) und dem Aussenden der nachfolgenden Synchronisationsnachricht (SY(k)) repräsentiert.

11. Verfahren nach einem der vorhergehenden Ansprüche, bei dem die Zeitsynchronisation auf dem Standard IEEE 1588 oder IEC 61588 oder IEEE 802.1AS basiert.

12. Verfahren nach einem der vorhergehenden Ansprüche, bei dem die Knoten basierend auf dem PROFINET-Standard miteinander kommunizieren.

13. Verfahren nach einem der vorhergehenden Ansprüche, bei dem das Verfahren in einem industriellen Automatisierungssystem eingesetzt wird.

14. Knoten zur Verwendung als zweiter Knoten (SLn) in einem Verfahren zur Zeitsynchronisation in einem Kommunikationsnetz mit einer Mehrzahl von Knoten (MA, SL1, SL2, SLn), wobei die Knoten (MA, SL1, SL2, SLn) einen ersten Knoten (MA) und einen oder mehrere zweite Knoten (SL1, SL2, SLn) umfassen, wobei der erste Knoten (MA) erste Taktzählzustände gemäß einer Referenztaktfrequenz generiert und der oder die zweiten Knoten (SL1, SL2) jeweils zweite Taktzählzustände gemäß einer internen Taktfrequenz generieren, wobei eine Zeitsynchronisation in aufeinander folgenden Synchronisationszyklen durchgeführt wird, in denen jeweils Synchronisationsnachrichten (SY(k)) ausgehend von dem ersten Knoten (MA) aufeinander folgend von einem Knoten (MA, SL1, SL2, SLn) zu einem weiteren Knoten (MA, SL1, SL2) übertragen werden und eine von einem Knoten (MA, SL1, SL2, SLn) ausgesendete Synchronisationsnachricht (SY(k)) eine Information (SI, SI') enthält, welche zur Zeitsynchronisation im die Synchronisationsnachricht (SY(k)) empfangenden Knoten (SL1, SL2, SLn) verwendet wird, wobei der zweite Knoten (SLn) derart ausgestaltet ist, dass er im Betrieb eine Zeitsynchronisation derart durchführt, dass in einem Schritt i) ein erster Taktzählzustand (Cin), der einem im zweiten Knoten (SLn) gemessenen zweiten Taktzählwert (TS(S$_n^{in}$(k)) entspricht, basierend auf einem Schätzverfahren mit Hilfe der Information (SI, SI') in einer empfangenen Synchronisationsnachricht (SY(k)) abgeschätzt wird;
**dadurch gekennzeichnet, dass** die Zeitsynchronisation einen Schritt ii) enthält, wonach aus dem abgeschätzten ersten Taktzählzustand (Cin) mithilfe eines Linear-Quadratischen Regulators (LQR) ein geregelter erster Taktzählzustand (CT) basierend auf einer Regelstrecke (PL) ermittelt wird, welche als Stellgröße (CV) einen Kompensationsfaktor enthält, welcher ein aktuelles Taktverhältnis der Referenztaktfrequenz zur internen Taktfrequenz des zweiten Knotens (SLn) schätzt, wobei der geregelte erste Taktzählzustand (CT) die synchronisierte Zeit darstellt.

15. Kommunikationsnetz mit einer Mehrzahl von Knoten (MA, SL1, SL2), wobei die Knoten (MA, SL1, SL2) einen ersten Knoten (MA) und einen oder mehrere zweite Knoten (SL1, SL2, SLn) umfassen, wobei der erste Knoten (MA) im Betrieb erste Taktzählzustände gemäß einer Referenztaktfrequenz generiert und der oder die zweiten Knoten (SL1, SL2) im Betrieb jeweils zweite Taktzählzustände gemäß einer internen Taktfrequenz generieren, wobei eine Zeitsynchronisation in aufeinander folgenden Synchronisationszyklen durchgeführt wird, in denen jeweils Synchronisationsnachrichten (SY(k)) ausgehend von dem ersten Knoten (MA) aufeinander folgend von einem Knoten (MA, SL1, SL2, SLn) zu einem weiteren Knoten (MA, SL1, SL2) übertragen werden und eine von einem Knoten (MA, SL1, SL2, SLn) ausgesendete Synchronisationsnachricht (SY(k)) eine Information (SI, SI') enthält, welche zur Zeitsynchronisation im die Synchronisationsnachricht (SY(k)) empfangenden Knoten (SL1, SL2, SLn) verwendet wird, wobei zumindest ein zweiter Knoten und insbesondere alle zweiten Knoten des Kommunikationsnetzes jeweilige Knoten gemäß Anspruch 14 sind.

16. Kommunikationsnetz nach Anspruch 15, welches derart ausgestaltet ist, dass in dem Kommunikationsnetz ein Verfahren nach einem der Ansprüche 2 bis 13 durchführbar ist.

**Claims**

1. Method for time synchronisation in a communication network having a plurality of nodes (MA, SL1, SL2, SLn), the nodes (MA, SL1, SL2, SLn) comprising a first node (MA) and one or more second nodes (SL1, SL2, SLn), the first node (MA) generating first cycle counting states according to a reference cycle frequency and the one or more second nodes (SL1, SL2, SLn) each generating second cycle counting states according to an internal cycle frequency, wherein time synchronisation is carried out in consecutive synchronisation cycles, in which, starting from the first node (MA), synchronisation messages (SY(k)) are each consecutively transferred from a node (MA, SL1, SL2, SLn) to a further node (MA, SL1, SL2, SLn) and a synchronisation message (SY(k)) transmitted from a node (MA, SL1, SL2, SLn) contains a piece of information (SI, SI'), which is used for time synchronisation in the node receiving synchronisation message (SY(k)) (SL1, SL2, SLn), wherein

   time synchronisation in a respective second node (SLn) of at least a part of the second nodes (SL1, SL2, Sin) is performed in such a way that in a step i) a first cycle counting state (Cin) corresponding with a second cycle counting state (TS($S_n^{in}$(k)) measured in the respective second node (SLn) is estimated based on an estimation method with the aid of the information (SI, SI') in a received synchronisation message (SY(k));

   **characterised in that**

   the time synchronisation contains a step ii), whereby from the estimated first cycle counting state (Cin), a linear-quadratic regulator (LQR) is used to determine a controlled first cycle counting state (CT) based on a plant (PL), which contains as control variable (CV) a compensation factor, which estimates a current duty cycle ratio of the reference cycle frequency to the internal cycle frequency of the respective second node (SLn), wherein the controlled first cycle counting state (CT) represents the synchronised time.

2. Method according to claim 1 wherein the control variable (CV) is updated after each reception of a synchronisation message (SY(K)) in the respective second node (SLn) and supplied to the plant (PL), preferably via a Zero-Order-Hold element (ZOH).

3. Method according to claim 2 wherein the plant (PL) for the linear-quadratic regulator (LQR) at the time of the reception of a synchronisation message (SY(k)) in the k-th synchronisation cycle in the n-th second node (SLn) and immediately before an updating of the control variable (CV) is written as follows:

$$\hat{x}_n^{C}(k) = \hat{x}_n^{C}(k-1) + o_n(k-1) \cdot a_n(k)$$

   wherein $\hat{x}_n^{C}(k)$ is the controlled first cycle counting state (CT) at the time of the reception of the synchronisation message (SY (k)) in the k-th synchronisation cycle;

   wherein $o_n(k-1)$ is the compensation factor used in the (k-l)-th synchronisation cycle;

   wherein $a_n(k)$ is the time difference between two synchronisation messages (SY(k)) received consecutively in the respective second node (SLn), expressed in second cycle counting states according to the internal cycle frequency of the n-th second node (SLn).

4. Method according to claim 3 wherein the plant (PL) for the linear-quadratic regulator (LQR) after an updating of the control variable (CV) at the time of the reception of the synchronisation message (SY(k)) in the k-th synchronisation cycle in the n-th second node (SLn) until the next updating of the control variable (CV) is written as follows:

$$x_n^{C} = \hat{x}_n^{C}(k) + o_n(k) \cdot \left( S_n - TS(S_n^{in}(k)) \right)$$

c

   wherein $x_n^{C}$ is the controlled first cycle counting state at the time of a measured second cycle counting state $S_n$ of the respective second node (SLn) between the two updatings;

   wherein $TS(S_n^{in}(k))$ is the measured second cycle counting state of the respective second node (SLn) at the time of the reception of the synchronisation message (SY(k)) in the k-th synchronisation cycle.

5. Method according to claim 3 or 4 wherein the compensation factor $o_n(k)$ for the k-th synchronisation cycle is expressed as:

$$o_n(k) = \hat{R}_n(k) + \frac{(\hat{x}_n^{\mathrm{in}} - \hat{x}_n^{\mathrm{C}}(k))}{\beta + a_n(k)}$$

wherein $\hat{R}_n(k)$ is an estimated value for the duty cycle ratio of the reference cycle frequency to the internal cycle frequency of the n-th second node (SLn);

wherein $\hat{x}_n^{\mathrm{in}}$ is the first cycle counting state (Cin) estimated in step i);

wherein $\beta$ is a positive factor, preferably lying between 5 and 20.

6.  Method according to any one of the preceding claims wherein the first cycle counting state (Cin) in step i) is estimated using an estimation method in the form of a stochastic state estimator (KF) and in particular a Kalman filter.

7.  Method according to claim 6 wherein the first cycle counting state (Cin) is estimated using an estimation method in the form of a Kalman filter (KF), which estimates the first cycle counting state (Cin) at the time of reception of a synchronisation message (SY(k)) in the respective second node (SLn) and an associated stochastic variance (qin) as a state and uses the information (SI, SI') in the received synchronisation message (SY(k)) as an observable.

8.  Method according to claim 7 wherein the information (SI, SI') in a synchronisation message (SY(k)) comprises an estimated first cycle counting state (Cout, Cout') at the time of transmission of the synchronisation message (SY(k)) in the respective second node (SLn) and an associated stochastic variance (qout, qout').

9.  Method according to claim 8 wherein the following state space model for the Kalman filter (KF) is used in the n-th second node (SLn) for the k-th synchronisation cycle:

$$x_n^{\mathrm{in}}(k) = x_n^{\mathrm{in}}(k-1) + a_n(k) \cdot \hat{R}_n(k) + a_n(k) \cdot \eta_n^a(k)$$

$$x_{n-1}{}^{out}(k) = x_n{}^{in}(k) - c_n(k) \cdot \hat{R}_n(k) - c_n(k) \cdot \eta_n^c(k) + v_n(k)$$

wherein $x_n^{\mathrm{in}}(k)$ is the first cycle counting state at the time of reception of the synchronisation message (SY(k)) in the n-th second node in the k-th synchronisation cycle;

wherein $x_{n-1}^{\mathrm{out}}(k)$ is the first cycle counting state at the time of transmission of the synchronisation message (SY(k)) in the (n-1)-th second node (SLn) or in the first node (MA) in the k-th synchronisation cycle;

wherein $a_n(k)$ is the time difference between two synchronisation messages (SY(k)) received consecutively in the n-th second node (SLn), expressed in second cycle counting states according to the internal cycle frequency of the n-th second node (SLn);

wherein $\hat{R}_n(k)$ is an estimated value for the duty cycle ratio of the reference cycle frequency to the internal cycle frequency of the n-th second node (SLn);

wherein $c_n(k)$ **is** an estimated time delay between the time of transmission of the synchronisation message (SY(k))from the (n-1)-th second node and the time of reception of this synchronisation message (SY(k)) in the n-th second node (SLn), expressed in second cycle counting states according to the internal cycle frequency of the n-th second node (SLn);

wherein $\eta_n^a(k)$, $\eta_n^c(k)$ and $v_n(k)$ are Gaussian noise terms.

10. Method according to claim 8 or 9 wherein the estimated first cycle counting state (Cout') at the time of transmission of the subsequent synchronisation message (SY(k)) in the respective second node (SLn) and the associated stochastic variance (qout') are calculated from the first cycle counting state estimated by the Kalman filter (Cin) at the time of reception of a synchronisation message (SY(k)) in the respective second node (SLn) and the associated stochastic variance (qin) with the aid of a node processing time and inserted in the subsequent synchronisation message (SY(k)), wherein the node processing time represents an estimated time delay in the respective second node (SLn) between the reception of the synchronisation message (SY(k))received in the respective second node (SLn) and the transmission of the subsequent synchronisation message (SY(k)).

**11.** Method according to any one of the preceding claims wherein the time synchronisation is based on the standard IEEE 1588 or IEC 61588 or IEEE 802.1AS.

**12.** Method according to any one of the preceding claims wherein the nodes based on the PROFINET-Standard communicate with each other.

**13.** Method according to any one of the preceding claims wherein the method is used in an industrial automation system.

**14.** Node for use as a second node (SLn) in a method for time synchronisation in a communication network having a plurality of nodes (MA, SL1, SL2, SLn), the nodes (MA, SL1, SL2, SLn) comprising first node (MA) and one or more second nodes (SL1, SL2, SLn), first node (MA) generating first cycle counting states according to a reference cycle frequency and the one or more second nodes (SL1, SL2) each generating second cycle counting states according to an internal cycle frequency, wherein time synchronisation is carried out in consecutive synchronisation cycles, in which, starting from the first node (MA), synchronisation messages (SY(k)) are each transferred consecutively from a node (MA, SL1, SL2, SLn) to a further node (MA, SL1, SL2) and a synchronisation message (SY(k)) transmitted from a node (MA, SL1, SL2, SLn) contains a piece of information (SI, SI'), which is used for time synchronisation in the node (SL1, SL2, SLn) receiving the synchronisation message (SY(k)), wherein the second node (SLn) is embodied such that, in operation, it carries out time synchronisation in such a way that in a step i) a first cycle counting state (Cin) corresponding with a second cycle counting state (TS($S_n^{in}$(k)) measured in the respective second node (SLn) is estimated based on an estimation method with the aid of the information (SI, SI') in a received synchronisation message (SY(k));
**characterised in that**
the time synchronisation contains a step ii), whereby from the estimated first cycle counting state (Cin), a linear-quadratic regulator (LQR) is used to determine a controlled first cycle counting state (CT) based on a plant (PL), which contains as control variable (CV) a compensation factor, which estimates a current duty cycle ratio of the reference cycle frequency to the internal cycle frequency of the respective second node (SLn), wherein the controlled first cycle counting state (CT) represents the synchronised time.

**15.** Communication network having a plurality of nodes (MA, SL1, SL2), the nodes (MA, SL1, SL2) comprising a first node (MA) and one or more second nodes (SL1, SL2, SLn), wherein, in operation, the first node (MA) generates first cycle counting states according to a reference cycle frequency and, in operation, the one or more second nodes (SL1, SL2) each generate second cycle counting states according to an internal cycle frequency, wherein time synchronisation in consecutive synchronisation cycles in which, starting from the first node (MA), synchronisation messages (SY(k)) each consecutively transferred from a node (MA, SL1, SL2, SLn) to a further node (MA, SL1, SL2) and a synchronisation message (SY(k)) transmitted from a node (MA, SL1, SL2, SLn) contains a piece of information(SI, SI'), which is used for time synchronisation in the node (SL1, SL2, SLn) receiving the synchronisation message (SY(k)), wherein at least one second node and in particular all second nodes of the communication network are respective nodes according to claim 14.

**16.** Communication network according to claim 15, which is embodied in such a way that a method according to any one of claims 2 to 13 can be carried out in the communication network.

**Revendications**

**1.** Procédé de synchronisation temporelle dans un réseau de communication comportant une pluralité de noeuds (MA, SL1, SL2, SLn), les noeuds (MA, SL1, SL2, SLn) incluant un premier noeud (MA) et un ou plusieurs deuxièmes noeuds (SL1, SL2, SLn), le premier noeud (MA) générant des premiers états de comptage d'impulsions d'horloge selon une fréquence d'impulsions d'horloge de référence et le ou les deuxièmes noeuds (SL1, SL2, SLn) générant respectivement des deuxièmes états de comptage d'impulsions d'horloge selon une fréquence d'impulsions d'horloge interne, une synchronisation temporelle étant effectuée dans des cycles de synchronisation successifs dans lesquels des messages de synchronisation (SY(k)) sont respectivement transmis, à partir du premier noeud (MA), successivement, d'un noeud (MA, SL1, SL2, SLn) vers un autre noeud (MA, SL1, SL2, SLn), et un message de synchronisation (SY(k)) émis par un noeud (MA, SL1, SL2, SLn) contenant une information (SI, SI') qui est utilisée pour la synchronisation temporelle dans le noeud (SL1, SL2, SLn) qui reçoit le message de synchronisation (SY(k)), une synchronisation temporelle étant effectuée dans un deuxième noeud respectif (SLn) d'au moins une partie des deuxièmes noeuds (SL1, SL2, SLn) de manière telle que, dans une étape i), un premier état de comptage d'impulsions d'horloge (Cin) correspondant à un deuxième état de comptage d'impulsions d'horloge (TS($S_n^{in}$(k)) mesuré dans

le deuxième noeud respectif (SLn) est estimé sur la base d'un procédé d'estimation à l'aide de l'information (SI, SI') dans un message de synchronisation reçu (SY(k)),
**caractérisé en ce que** la synchronisation temporelle comporte une étape ii) selon laquelle est déterminé, à partir du premier état de comptage d'impulsions d'horloge estimé (Cin), à l'aide d'un régulateur linéaire quadratique (LQR), un premier état de comptage d'impulsions d'horloge réglé (CT) sur la base d'un trajet de régulation (PL) qui contient, en tant que grandeur de réglage (CV), un facteur de compensation qui estime un rapport d'impulsions d'horloge actuel entre la fréquence d'impulsions d'horloge de référence et la fréquence d'impulsions d'horloge interne du deuxième noeud respectif (SLn), le premier état de comptage d'impulsions d'horloge (CT) représentant le temps synchronisé.

2. Procédé selon la revendication 1, selon lequel la grandeur de réglage (CV) est mise à jour après chaque réception d'un message de synchronisation (SY(k)) dans le deuxième noeud respectif (SLn) et est amenée sur le trajet de régulation (PL) de préférence via un élément de maintien d'ordre zéro (ZOH).

3. Procédé selon la revendication 2, selon lequel le trajet de régulation (PL) du régulateur linéaire quadratique (LQR) au moment de la réception d'un message de synchronisation (SY(k)) au $k^{ième}$ cycle de synchronisation dans le $n^{ième}$ deuxième noeud (SLn) et directement avant une mise à jour de la grandeur de réglage (CV) se présente comme suit :

$$\hat{x}_n^C(k) = \hat{x}_n^C(k-1) + o_n(k-1) \cdot a_n(k)$$

$\hat{x}_n^C(k)$ étant le premier état réglé de comptage d'impulsions d'horloge (CT) au moment de la réception du message de synchronisation (SY(k)) au $k^{ième}$ cycle de synchronisation,
$o_n(k-1)$ étant le facteur de compensation utilisé au $(k-1)^{ième}$ cycle de synchronisation,
$a_n(k)$ étant la différence de temps entre deux messages de synchronisation (SY(k)) reçus successivement dans le deuxième noeud respectif (SLn), indiquée en deuxièmes états de comptage d'impulsions d'horloge selon la fréquence selon une fréquence d'impulsions d'horloge interne du $n^{ième}$ deuxième noeud (SLn).

4. Procédé selon la revendication 3, selon lequel le trajet de régulation (PL) du régulateur linéaire quadratique (LQR) après une mise à jour de la grandeur de réglage (CV) au moment de la réception du message de synchronisation (SY(k)) au $k^{ième}$ cycle de synchronisation dans le $n^{ième}$ deuxième noeud (SLn), jusqu'à la mise à jour suivante de la grandeur de réglage (CV), se présente comme suit :

$$x_n^C = \hat{x}_n^C(k) + o_n(k) \cdot \left( S_n - TS(S_n^{in}(k)) \right)$$

$x_n^C$ étant le premier état réglé de comptage d'impulsions d'horloge au moment d'un deuxième état mesuré d'impulsions d'horloge $S_n$ du deuxième noeud respectif (SLn) entre les deux mises à jour ;
$TS(S_n^{in}(k))$ étant le deuxième état mesuré d'impulsions d'horloge du deuxième noeud respectif (SLn) au moment de la réception du message de synchronisation (SY(k)) au $k^{ième}$ cycle de synchronisation.

5. Procédé selon la revendication 3 ou 4, selon lequel le facteur de compensation $o_n(k)$ pour le $k^{ième}$ cycle de synchronisation est donné par :

$$o_n(k) = \hat{R}_n(k) + \frac{(\hat{x}_n^{in} - \hat{x}_n^C(k))}{\beta + a_n(k)}$$

$\hat{R}_n(k)$ étant une valeur estimée du rapport d'impulsions d'horloge entre la fréquence d'impulsions d'horloge de référence et la fréquence d'impulsions d'horloge interne du $n^{ième}$ deuxième noeud (SLn) ;
$\hat{x}_n^{in}$ étant le premier état de comptage d'impulsions d'horloge (Cin) estimé à l'étape i) ;
β étant un facteur positif situé de préférence entre 5 et 20.

**6.** Procédé selon l'une des revendications précédentes, selon lequel le premier état de comptage d'impulsions d'horloge (Cin) est estimé, à l'étape i), au moyen d'un procédé d'estimation sous la forme d'un estimateur d'état stochastique (KF), et plus particulièrement d'un filtre de Kalman.

**7.** Procédé selon la revendication 6, selon lequel le premier état de comptage d'impulsions d'horloge (Cin) est estimé au moyen d'un procédé d'estimation sous la forme d'un filtre de Kalman (KF) qui estime, en tant qu'état, le premier état de comptage d'impulsions d'horloge (Cin) au moment de la réception d'un message de synchronisation (SY(k)) dans le deuxième noeud respectif (SLn) et une variance stochastique associée (qin) et utilise, en tant qu'observable, l'information (SI, SI') contenue dans le message de synchronisation reçu (SY(k)).

**8.** Procédé selon la revendication 7, selon lequel l'information (SI, SI') contenue dans un message de synchronisation (SY(k)) comprend un premier état de comptage d'impulsions d'horloge estimé (Cout, Cout') au moment de l'émission du message de synchronisation (SY(k)) dans le deuxième noeud respectif (SLn) et une variance stochastique associée (qout, qout').

**9.** Procédé selon la revendication 8, selon lequel est utilisé le modèle d'espace d'états suivant pour le filtre de Kalman (KF) dans le $n^{\text{ième}}$ deuxième noeud (SLn) pour le $k^{\text{ième}}$ cycle de synchronisation :

$$x_n^{\text{in}}(k) = x_n^{\text{in}}(k-1) + a_n(k) \cdot \hat{R}_n(k) + a_n(k) \cdot \eta_n^a(k)$$

$$x_{n-1}^{\text{out}}(k) = x_n^{\text{in}}(k) - c_n(k) \cdot \hat{R}_n(k) - c_n(k) \cdot \eta_n^c(k) + v_n(k)$$

$x_n^{\text{in}}(k)$ étant le premier état de comptage d'impulsions d'horloge au moment de la réception du message de synchronisation (SY(k)) dans le $n^{\text{ième}}$ deuxième noeud au $k^{\text{ième}}$ cycle de synchronisation ;

$x_{n-1}^{\text{out}}(k)$ étant le premier état de comptage d'impulsions d'horloge au moment de l'émission du message de synchronisation (SY(k)) dans le $(n-1)^{\text{ième}}$ deuxième noeud (SLn) ou dans le premier noeud (MA) au $k^{\text{ième}}$ cycle de synchronisation ;

$a_n(k)$ étant la différence de temps entre deux messages de synchronisation (SY(k)) reçus successivement dans le $n^{\text{ième}}$ deuxième noeud (SLn), indiquée dans des deuxièmes états de comptage d'impulsions d'horloge selon la fréquence d'impulsions d'horloge interne du $n^{\text{ième}}$ deuxième noeud (SLn) ;

$\hat{R}_n(k)$ étant une valeur estimée du rapport d'impulsions d'horloge entre la fréquence d'impulsions d'horloge de référence et la fréquence d'impulsions d'horloge interne du $n^{\text{ième}}$ deuxième noeud (SLn) ;

$c_n(k)$ étant un temps de retard estimé entre le moment de l'émission du message de synchronisation (SY(k)) émis par le $(n-1)^{\text{ième}}$ deuxième noeud (SL(n-1)) et le moment de réception de ce message de synchronisation (SY(k)) dans le $n^{\text{ième}}$ deuxième noeud (SLn), indiqué dans des deuxièmes états de comptage d'impulsions d'horloge selon la fréquence d'impulsions d'horloge interne du $n^{\text{ième}}$ deuxième noeud (SLn) ;

$\eta_n^a(k)$ , $\eta_n^c(k)$ et $v_n(k)$ étant des termes de bruit gaussien.

**10.** Procédé selon la revendication 8 ou 9, selon lequel le premier état de comptage d'impulsions d'horloge estimé (Cout') au moment de l'émission du message de synchronisation suivant (SY(k)) dans le deuxième noeud respectif (SLn) et la variance stochastique associée (qout') sont calculés à l'aide d'un temps de traitement de noeud, à partir du premier état de comptage d'impulsions d'horloge (Cin) estimé par le filtre de Kalman au moment de la réception d'un message de synchronisation (SY(k)) dans le deuxième noeud respectif (SLn) et de la variance stochastique associée (qout'), et insérés dans le message de synchronisation suivant (SY(k)), le temps de traitement de noeud représentant un temps de retard estimé dans le deuxième noeud respectif (SLn) entre la réception du message de synchronisation (SY(k)) reçu dans le deuxième noeud respectif (SLn) et l'émission du message de synchronisation suivant (SY(k)).

**11.** Procédé selon l'une des revendications précédentes, selon lequel la synchronisation temporelle est basée sur les normes IEEE 1588 ou IEC 61588 ou IEEE 802.1AS.

**12.** Procédé selon l'une des revendications précédentes, selon lequel les noeuds communiquent entre eux sur la base de la norme PROFINET.

EP 2 534 775 B1

**13.** Procédé selon l'une des revendications précédentes, selon lequel le procédé est mis en oeuvre dans un système d'automatisation industriel.

**14.** Noeud destiné à être utilisé en tant que deuxième noeud (SLn) dans un procédé de synchronisation temporelle dans un réseau de communication comportant une pluralité de noeuds (MA, SL1, SL2, SLn), les noeuds (MA, SL1, SL2, SLn) incluant un premier noeud (MA) et un ou plusieurs deuxièmes noeuds (SL1, SL2, SLn), le premier noeud (MA) générant des premiers états de comptage d'impulsions d'horloge selon une fréquence d'impulsions d'horloge de référence et le ou les deuxièmes noeuds (SL1, SL2) générant respectivement des deuxièmes états de comptage d'impulsions d'horloge selon une fréquence d'impulsions d'horloge interne, une synchronisation temporelle étant effectuée dans des cycles de synchronisation successifs dans lesquels des messages de synchronisation (SY(k)) sont respectivement transmis, à partir du premier noeud (MA), successivement, d'un noeud (MA, SL1, SL2, SLn) vers un autre noeud (MA, SL1, SL2) et un message de synchronisation (SY(k)) émis par un noeud (MA, SL1, SL2, SLn) contenant une information (SI, SI') qui est utilisée pour la synchronisation temporelle dans le noeud (SL1, SL2, SLn) qui reçoit le message de synchronisation (SY(k)), le deuxième noeud (SLn) étant réalisé de manière à effectuer une synchronisation temporelle de manière telle, pendant le fonctionnement, que, dans une étape i), un premier état de comptage d'impulsions d'horloge (Cin) correspondant à une deuxième valeur de comptage d'impulsions d'horloge (TS ($S_n^{in}$ (k)) mesurée dans le deuxième noeud (SLn) est estimé, sur la base d'un procédé d'estimation à l'aide de l'information (SI, SI') contenue dans un message de synchronisation reçu (SY(k)), **caractérisé en ce que** la synchronisation temporelle comporte une étape ii) dans laquelle est déterminé, à partir du premier état de comptage d'impulsions d'horloge estimé (Cin), à l'aide d'un régulateur linéaire quadratique (LQR), un premier état de comptage d'impulsions d'horloge réglé (CT) sur la base d'un trajet de régulation (PL) qui contient, en tant que grandeur de réglage (CV), un facteur de compensation qui estime un rapport d'impulsions d'horloge actuel entre la fréquence d'impulsions d'horloge de référence et la fréquence d'impulsions d'horloge interne du deuxième noeud (SLn), le premier état de comptage d'impulsions d'horloge réglé (CT) représentant le temps synchronisé.

**15.** Réseau de communication comportant une pluralité de noeuds (MA, SL1, SL2), les noeuds (MA, SL1, SL2) incluant un premier noeud (MA) et un ou plusieurs deuxièmes noeuds (SL1, SL2, SLn), le premier noeud (MA) générant, pendant le fonctionnement, des premiers états de comptage d'impulsions d'horloge selon une fréquence d'impulsions d'horloge de référence et le ou les deuxièmes noeuds (SL1, SL2) générant respectivement, pendant le fonctionnement, des deuxièmes états de comptage d'impulsions d'horloge selon une fréquence d'impulsions d'horloge interne, une synchronisation temporelle étant effectuée dans des cycles de synchronisation successifs dans lesquels des messages de synchronisation (SY(k)) sont respectivement transmis, à partir du premier noeud (MA), successivement, d'un noeud (MA, SL1, SL2, SLn) vers un autre noeud (MA, SL1, SL2) et un message de synchronisation (SY(k)) émis par un noeud (MA, SL1, SL2, SLn) contenant une information (SI, SI') qui est utilisée pour la synchronisation temporelle dans le noeud (SL1, SL2, SLn) qui reçoit le message de synchronisation (SY(k)), au moins un deuxième noeud (SLn) et plus particulièrement tous les deuxièmes noeuds du réseau de communication étant des noeuds selon la revendication 14.

**16.** Réseau de communication selon la revendication 15, réalisé de manière telle qu'un procédé selon l'une des revendications 2 à 13 peut être exécuté dans ledit réseau de communication.

# FIG 1

# FIG 2

# FIG 3

EP 2 534 775 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 09012028 A

- EP 2020766 A1


**In der Beschreibung aufgeführte Nicht-Patentliteratur**

- **C. NA ; R. L. SCHEITERER ; D. OBRADOVIC.** A Kalman Filter Approach To Clock Synchronization Of Cascaded Network Elements, 1st IFAC Workshop on Estimation and Control of Networked Systems (NecSys'09). Venedig, 24. September 2009

- LQG control over a Markov communication network. **J. NILSSON et al.** Proceedings of the 36th IEEE Conference. 10. Dezember 1997, vol. 5, 4586-4591